# EUROPÄISCHE PATENTSCHRIFT

(11) **EP 2 352 971 B1**
(45) Veröffentlichungstag und Bekanntmachung des Hinweises auf die Patenterteilung: **18.02.2015**
(21) Anmeldenummer: 09801929.2
(22) Anmeldetag: 18.11.2009
(51) Int. Cl.: G01D 4/00, H04L 9/32

(54) **MESSGERÄT, INSBESONDERE ENERGIEZÄHLER UND VERFAHREN ZUR ERKENNUNG VON MANIPULATIONEN**
MEASUREMENT DEVICE, PARTICULARLY ENERGY COUNTER AND METHOD FOR RECOGNITION OF MANIPULATIONS
APPAREIL DE MESURE, EN PARTICULIER COMPTEUR D'ÉNERGIE, ET PROCÉDÉ POUR DÉTECTER LES MANIPULATIONS

(30) Priorität: 19.11.2008 DE 102008058264
(43) Veröffentlichungstag der Anmeldung: 10.08.2011
(73) Patentinhaber: iAd Gesellschaft für Informatik, Automatisierung und Datenverarbeitung mbH, 90613 Grosshabersdorf (DE)
(72) Erfinder: HAMPEL, Hermann, 90613 Grosshabersdorf (DE); BUMILLER, Gerd, 90768 Fürth/Vach (DE)
(74) Vertreter: Dreykorn-Lindner, Werner
(86) Internationale Anmeldenummer: PCT/EP2009/008225
(87) Internationale Veröffentlichungsnummer: WO 2010/057631

(56) Entgegenhaltungen:
- DE-A1- 10 034 274
- DE-A1- 10 204 065
- US-A1- 2006 206 433
- US-A1- 2006 271 244

## Beschreibung

Die Erfindung betrifft gemäß Patentanspruch 1 ein Messgerät, insbesondere Energiezähler zur sicheren Erfassung und Anzeige der Zählerstandsdaten und gemäß Patentanspruch 6 ein Verfahren zur Erkennung von Manipulationen.

Heutzutage werden Verbrauchsdaten für verschiedene Versorgungsarten im Haushalt (Strom, Kaltwasser, Warmwasser, Wärme, Kälte, Gas, Öl oder vergleichbare Stoffe) an physikalisch unterschiedlichen Messstellen erfasst. Diese elementaren Versorgungsleistungen, die auch mit dem Begriff Multi Utility zusammengefasst werden, gleichen sich allerdings in folgenden Merkmalen:
➢ dem Bedürfnis, dass die gemessenen und geeichten Werte in der Rechnung nicht angezweifelt werden (Stichwort: Verbraucherschutz),
➢ die Übertragung der lokal angezeigten Messwerte in Form von Zahlen an eine zentrale Stelle sowie die dortige Verarbeitung,
➢ die Realisierung einer schnellen, zeit- und verbrauchsgerechten Rechnungslegung sowie die Überwachung durch ein Cash Management und
➢ dem Bedürfnis, eine einheitliche Lösung für alle Versorgungsarten zu schaffen.

Bisherige technische Entwicklungen für Messgeräte sowie Systeme für ein kombiniertes Erfassen der Verbrauchsdaten weisen bestimmte typische Schwächen und Probleme, wie fehlende Durchgängigkeit oder Einzellösungen für bestimmte Segmente, auf. Versorgungsunternehmen, etwa Energieversorgungsunternehmen oder Wasserversorgungsunternehmen, erstellen in der Regel die Verbrauchsabrechnungen auf der Basis von Zählerstandsdaten von den Kunden zugeordneten Verbrauchszählern, welche meistens in der Nähe der Verbrauchsstellen installiert sind. Verbrauchszähler können beispielsweise Gaszähler, Wasserzähler, Stromzähler, Wärmezähler, Heizkostenverteiler etc. sein, wobei die Zählerstandsdaten jeweils für zurückliegende Verbrauchsperioden ein Maß für die an der Verbrauchsstelle verbrauchte Menge angeben. In der Regel erfolgt die Erfassung der Zählerstandsdaten bzw. die Zählerablesung für ein Haus, eine Wohnung oder ggf. eine einzelne Verbrauchsstelle mindestens einmal jährlich.

Aus der US 6,538,577 B1 ist ein elektronischer Zähler (Verbrauchszähler) mit zwei verschiedenen Arten von Kommunikation zwischen Verbrauchszähler und utility (Verbrauchsdatenerfassungszentrale) bekannt. Die Kommunikation mit der Verbrauchsdatenerfassungszentrale erfolgt beim indirekten Verfahren mittels zweiwegiger Funkübertragung (two-way wireless transceiver) über ein Funk-LAN (local area network mit 900 MHz, zweiwegig, Spread-Spektrum) zu einem Gateway Node (Gateway), welcher über ein zweiwegiges, kommerziell verfügbares, festes WAN (wide area network) mit der Verbrauchsdatenerfassungszentrale in Verbindung steht Beim direkten Verfahren ist ein Netzwerkinterface (PLC modul → communication network module) vorgesehen, das auf Rückseite der Zählerplatine aufgesteckt wird. Dabei werden das LAN bzw. das Gateway überbrückt (bygepasst, da hierfür nicht nötig). Der Verbrauchszähler hat für das Entfernen und Austauschen von Schaltungsboards und Modulen innerhalb des Zählers ein modulares Design, wobei diese auf eine gemeinsame Backplane oder ein Bussystem gesteckt werden und dient zur Übertragung von Verbrauchsdaten und Stromqualität. Das Gateway ist entfernt vom Zähler angeordnet und hat vier Komponenten, nämlich WAN Interface Modul, Initialisierungs-µC, Spread-Spektrum -Prozessor und RF-Transceiver. Der Funktransceiver kann auch Verbrauchsdaten anderer Zähler, die Funktransceiver beinhalten, empfangen und an die Verbrauchsdatenerfassungszentrale weiterleiten. Beim Gegenstand der US 6,538,577 B1 findet der Austausch von Daten zwischen Verbrauchszähler und dem Gateway nur im (LAN-) Funk-Betrieb statt.

Weiterhin ist in der Anmeldung EP 1 677 270 A1 ein Verfahren zum Aufbau von AMR-Netzwerken (automatic meter reading) beschrieben, das folgende Komponenten umfasst:
- Zähler,
- Sammeleinheiten (Gathering Units) (z.B. Elektrizitätszähler oder Terminal Units),
- Konzentratoren (gewöhnlich; Industrie-PC),
und bei dem drei Typen von Verbindungen:
- LPRB (low power radio or Bluetooth),
- PLC (power line communication),
- MC (mobile connection. insbesondere über Mobiltelefon),
zur Herstellung optimaler Verbindungen in AMR-Netzwerken vorgesehen sind. Dabei wird in mindestens einer Sammeleinheit eine Konversion zwischen LPRB (am Eingang) und PLC (am Ausgang) durchgeführt.

Weiterhin ist aus der WO 2008/086231 A2 ein mobiles Verbrauchsdatenerfassungssystem und ein Verfahren zur Funkauslesung der Verbrauchszähler bei der Datenerfassungstour und zur Rekonfiguration des AMR-Verbrauchsdatenerfassungssystems bekannt. Die Verbrauchszähler können beispielsweise Gaszähler, Wasserzähler, Stromzähler, Wärmezähler, Heizkostenverteiler etc. sein, welche in einem Endpunkt mit einer Funkschnittstelle zusammengefasst werden. Dabei hat das Ablesepersonal mit einer mobilen Funkempfangs-Datenübernahmeinrichtung eine Datenerfassungstour zu absolvieren, bei der die Funkempfangs-Datenübernahmeeinrichtung nacheinander in die Bereiche der Sendereichweiten der per Funk auszulesenden Verbrauchszähler gebracht wird. Beim sogenannten drive-by unit wird die mobile Funkempfangs-Datenübernahmeeinrichtung mit einem Fahrzeug langsam eine Straße entlang bewegt, an der Häuser mit zur Verbrauchsdaten-Erfassung anstehenden "funkenden" Verbrauchszählern stehen. Das Mobilfunksende- und -empfangsgerät ist dazu eingerichtet, die von einem betreffenden Verbrauchszähler mittels der Funkempfangseinrichtung übernommenen Zählerstandsdaten in Zuordnung zu den Zähleridentifikationsdaten zu einer zentralen Datenerfassungsstelle zu senden. Die gesendeten Daten werden über das Mobilfunksystem (uni- oder bidirektionale Funkverbindung) zu der zentralen Datenerfassungsstelle innerhalb eines bestimmten Zeitintervalls, das mit dem Zeitpunkt der Übernahme der Zählerstandsdaten in die Datenübernahmeeinrichtung beginnt, übertragen. Weiterhin können Ortsinformationen über die Lage der Verbrauchszähler, beispielsweise mittels GPS-Funkortungssystems, erfasst und über das Mobilfunksystem von der Datenerfassungsstelle zu dem Mobilfunk-Endgerät der Datenerfassungsperson gesendet werden. Falls ein Zähler unbeabsichtigt ausgelassen wird oder wegen eines Defektes, einer Störung und dergleichen kein Signal sendet, oder nicht korrekt rückgesetzt werden kann, wird dies in der zentralen Datenerfassungsstelle automatisch registriert, weil von einem solchen Zähler kein erwarteter Datensatz mit Identifikationsdaten zu der zentralen Datenerfassungsstelle gelangt. Die Verifikation der Integrität oder Validität empfangener Daten wird mit Hilfe von CRC-Codes erzielt, wobei die Verifikation eines korrekten Datenempfangs durch das Messgerät mittels einer "Rückantwort" in Form einer Art "Quittungs"-Nachricht beschrieben ist. Von der zentralen Datenerfassungsstelle kann dann automatisch eine entsprechende Rückmeldung über den nicht erfassten Verbrauchszähler über das Mobilfunksystem zu der Ableseperson veranlasst werden. Diese Person kann erneut die Gerätekombination in den Bereich der Soll-Funkreichweite des ausgelassenen Verbrauchszählers führen, um durch etwaige Suche nach empfanggünstigeren Standorten eventuell doch noch ein Datentelegramm (Zählerstandsdaten, Zähleridentifikationsdaten, Ortsinformationsdaten) von dem betreffenden Verbrauchszähler zu empfangen.

Um sowohl eine zentrale Datenerfassung und Femauslesung, d.h. Harmonisierung der Dienste aller Verbrauchsmengen zu wirtschaftlichen Konditionen, als auch eine Energiesteuerung auf der Basis von gemessenen Werten/Historie zu ermöglichen, ist aus der Europäischen Patentanmeldung EP 1 850 500 A1 der Anmelderin ein Datenerfassungs- und Steuerungssystem bekannt, welches aufweist:
- mindestens ein mit einer Antenne verbundenes Funkmodul zur Anbindung mindestens eines mit einem Funksender und/oder Funkempfänger ausgestatteten Remotemoduls eines Gerätes oder eines Verbrauchszählers,
- eine mit dem Funkmodul in Verbindung stehende Steuereinrichtung mit einem Programm- und Datenspeicher zur Zwischenspeicherung der vom Funkmodul zugeführten Daten,
- ein mit der Steuereinrichtung verbundenes Kommunikationsmodul und ein damit verbundenes erstes Ankoppelmodul zur Übertragung der zugeführten Daten über Stromversorgungsleitungen, und
- ein mit den Stromversorgungsleitungen über ein Kommunikationsmodul und ein damit verbundenes zweites Ankoppelmodul in Verbindung stehendes Kommunikationsgateway, welches am Ort eines Summen-Stromzählers angeordnet ist,
so dass das Kommunikations-Gateway zusammen mit den Stromversorgungsleitungen im Haushalt ein Backbone-Netz für die Datenübertragung ausgestaltet und der Austausch von Daten zwischen dem Remotemodul oder Verbrauchszähler mit dem Kommunikations-Gateway im kombinierten Funk-/Powerline-Betrieb stattfindet.

Das Verfahren zur Datenübertragung in einem Datenerfassungs- und Steuerungssystem gemäß der Europäischen Patentanmeldung EP 1 850 500 A1 der Anmelderin ist dadurch ausgestaltet, dass:
- zur Anbindung der Remotemodule oder Verbrauchszähler das Funkmodul dient,
- das Kommunikations-Gateway eine Knotenfunktion übernimmt und Daten von und zu einer zentralen Mess- oder Übergabestelle überträgt,
- das Kommunikations-Gateway zusammen mit den Stromversorgungsleitungen im Haushalt ein Backbone-Netz für die Datenübertragung ausgestaltet,
- der Austausch von Daten zwischen den Remotemodulen oder Verbrauchszählern mit dem Kommunikations-Gateway im kombinierten Funk-/Powerline-Betrieb stattfindet und
- das Kommunikations-Gateway eine Schnittstelle für weitere Mehrwertdienstleistungen im Bereich Multi Utility, Sicherheitstechnik, Haus- und Gebäudemanagement sowie Automatisierungstechnik bis hin zu Dienstleistungen im Bereich Home Automation einschließlich der Energiesteuerung bildet.

Stromzähler mit zwei und mehr Zählwerken, um unterschiedliche Tarife abrechnen zu können, wobei wischen diesen Zählwerken durch eingebaute oder externe Rundsteuerempfänger (die durch zentrale Rundsteueranlagen im Energieversorgungsunternehmen gesteuert werden) oder durch Tarifschaltuhren entsprechend umgeschaltet wird sind seit vielen Jahren gebräuchlich. Die seit einigen Jahren neu entwickelten elektronischen Energiezähler enthalten keine mechanischen Elemente. Die Erfassung des Stromes erfolgt beispielsweise durch Stromwandler mit einem weichmagnetischen Ringkern (beziehungsweise einem Strommesssystemen mit Rogowskispulen) mittels Nebenschlusswiderstand (Shunt) oder Hallelementen. Die Berechnung der Energie erfolgt mit einer elektronischen Schaltung und das Ergebnis wird einer alphanumerischen Anzeige (meist Flüssigkristallanzeige, LCD) zugeführt, Bei Sondervertragskunden (Industrie) sind weitere Zählwerke, auch für die Leistungserfassung, gebräuchlich. Jedoch wird in der Praxis hier nach und nach auf elektronische Zähler mit einer Aufzeichnung des Lastgangs umgestellt. Somit kann die Tarifierung ohne Eingriff in den Zähler verändert werden und es werden im Zähler keine getrennten Zählwerke mehr benötigt.

Manche elektronischen Zähler können über Datenschnittstellen per Fernabfrage vom Energieversorgungsunternehmen und der Gebäudeautomation ausgelesen werden. Als Datenschnittstellen sind in der Praxis Infrarot, S0-Schnittstelle, M-Bus, Potentialfreier Kontakt u.a. verbunden mit GSM-, PSTN-Modems oder PLC-Modul gebräuchlich. Derzeit finden in der Bundesrepublik Deutschland (ab April 2006) auch Feldversuche mit ständigen Verbindungen über Internet (DSL) statt. In den USA wurden elektronische Haushaltszähler mit einem integrierten Relais entwickelt. die dem Energieversorger neben der Fernauslesbarkeit das ferngesteuerte Abschalten ermöglichen, beispielsweise bei ausstehender Zahlung der Rechnung. In Deutschland werden intelligente Zähler zunehmend im Rahmen von Pilotprojekten zur Einführung der Smart-Metering-Technologie eingesetzt. Die Impulsausgänge (S0) liefern in der Regel Verbrauchsdatensignale, welche zwischen 2000 bis 5000 Impulsen pro kWh umfassen. Dieser Wert muss dann abhängig vom Zähler mit einem festen Faktor von zum Beispiel 30 oder 50 multipliziert werden, um den kumulierten Messwert zu bekommen.

Weiterhin sind auch Kassierzähler (Münzzähler), welche durch den Einwurf von Geld, Jetons oder Prepaidzähler, welche durch Chipkarten, Chipschlüssel oder Eingabe einer PIN den Abruf einer definierten Menge elektrischer Energie ermöglichen, bekannt. In Deutschland werden solche Zähler beispielsweise in Waschsalons oder auch von Energieversorgungsunternehmen bei Kunden mit schlechter Zahlungsmoral eingesetzt.

Bei Großkunden wird der Stromverbrauch nicht nur anhand der genutzten Energie (in kWh), sondern zusätzlich nach der durchschnittlich genutzten Leistung (kW) berechnet. Hierfür werden Lastgangzähler installiert, die über jedes 15-min-Intervall die dabei durchschnittlich genutzte Leistung ermitteln und speichern (1/4-h-Leistungsmessung). Typischerweise werden diese Zähler per Fernabfrage ausgelesen. Für kleinere Kunden wird der Lastgang anhand eines Standardlastprofils (z. B. H0 für Haushaltskunden) nachgebildet.

Stromzähler, die im geschäftlichen Verkehr eingesetzt werden, unterliegen in der Bundesrepublik Deutschland der Eichpflicht. Nach Ablauf der Eichgültigkeitsdauer .(16 Jahre beziehungsweise 8 Jahre bei elektronischen Zählern, 12 Jahre für mechanische Messwandlerzähler mit Induktionswerk, d.h. mit Läuferscheibe) muss das Messgerät ausgetauscht oder die Eichgültigkeit verlängert werden.

Zur Kommunikation (primär Messdatenaustausch, aber auch Firmwareupgrades) wird bei dem ab 2008 laufenden Feldversuches, bei dem insgesamt 2.000 taktsynchronen Lastgangzähler auf verschiedene Unternehmen aufgeteilt wurden, die Smart Message Language SML benutzt, bei der es sich um eine Sprache ähnlich dem Industriestandard eXtensible Markup Language XML handelt, und welche ebenfalls getestet wird. Diese soll die bisherigen herstellerspezifischen Kommandos zur Zählerabfrage ablösen. Bei herkömmlichen Lastgangzählern ist eine Echtzeituhr eingebaut, welche nach einem Stromausfall auf eine vordefinierte Startzeit springt. Tritt zwischen zwei Ablesungen ein derartiger Fehler mehrmals auf, so sind, da kein korrekter Zeitbezug mehr vorliegt und die Zeiten verschiedener Zähler auseinander laufen, die Messwerte nicht brauchbar.

Für die Lösung des Problems gibt es verschiedene Ansätze. Einige Lastgangzähler verwenden eine Echtzeituhr und Verfahren zur Synchronisation, wobei die Uhren regelmäßig gestellt werden. Gemäß Spezifikation des taktsynchronen Lastgangzählers ist statt der Echtzeituhr ein (Sekunden-)Zähler eingebaut. Der Stand dieses Zählers wächst mit jeder Sekunde streng monoton und dient zur eindeutigen Kennzeichnung der (Strom-)Zählerstände. Nach dem Auslesen des taktsynchronen Lastgangzählers wird dieser Sekundenindex mit der absoluten Zeit verknüpft. Kommt es bei diesem Zähler zu (mehrfachen) Spannungsunterbrechungen, bleibt die Reihenfolge der Werteblöcke eindeutig. Beim taktsynchronen Lastgangzähler gibt es eine Aufteilung in ein Basisgerät und verschiedene Module, wobei die Basisgeräte und Module aller Hersteller kompatibel sein sollen. Das Basisgerät stellt nur die Grundfunktionen, wie den eichpflichtigen Teil, eines Zählers bereit. Alle anderen Funktionen wie Schnittstellen zu anderen Geräten oder Kommunikationseinheiten (z. B. GSM- oder GPRS-Modul) können als Modul aufgesteckt werden. Es entfällt somit die Notwendigkeit für jede mögliche Anwendung ein eigenes Gerät zu entwickeln, bzw. einkaufen und vorhalten zu müssen. Andererseits wird es immer wichtiger einen Manipulationsschutz bei Verbrauchsabrechnungen auf der Basis von Zählerstandsdaten zu gewährleisten. Das Hauptaugenmerk liegt dabei darauf Manipulationen, insbesondere Öffnen der in der Regel plombierten Zählergehäuse durch den Verbraucher zu erkennen.

Beispielsweise ist aus der WO 2006/048143 A1 eine Vorrichtung zur zuverlässigen und energiesparenden Erkennung von Gehäusemanipulationen an Verbrauchszählern ohne mechanisch betätigbaren Taster oder Magnetschalter oder Lichtschranke bekannt. Im Einzelnen umfasst diese Vorrichtung ein eine Auswerteelektronik aufnehmendes erstes Gehäuseteil sowie ein vom ersten Gehäuseteil lösbares zweites Gehäuseteil und das erste Gehäuseteil ist gegen unberechtigtes Entfernen des zweiten Gehäuseteiles gesichert. Im ersten Gehäuseteil ist hierzu ein aus einer Spule und einem Kondensator bestehender elektrischer Schwingkreis vorgesehen, dessen Spule durch ein im zweiten Gehäuseteil befindliches metallisches Material bei einer Änderung des Abstandes zwischen der Spule und dem metallischen Material ein Signal erzeugt und das Signal der im ersten Gehäuseteil befindlichen nachgeschalteten Auswerteelektronik zuführt und zur weiteren Verarbeitung bereitstellt. Für die Erkennung des Entfernens des zweiten Gehäuseteils vom ersten Gehäuseteil, die eine Änderung der Güte der Spule des Schwingkreises bedingt, wird die Stärke der Bedämpfung des Schwingkreises und damit die Dauer der Impulsantwort der elektrischen Schaltung herabgesetzt. Der elektrische Schwingkreis der erfindungsgemäßen Vorrichtung ist vorzugsweise als Annäherungsschalter mit einem geringen Strombedarf ausgeführt. Zur Anregung des Schwingkreises genügt ein sehr kurzer Spannungsimpuls mit sehr niedriger Energie. Erfolgt die Anregung gleichzeitig mit vergleichsweise niedriger Periodizität, beispielsweise alle zehn Sekunden, ergibt sich ein sehr niedriger mittlerer Leistungsbedarf der erfindungsgemäßen Überwachungsschaltung, der auch über sehr lange Zeiträume einen Betrieb aus primären oder sekundären Batterien oder hochkapazitiven Kondensatoren ermöglicht. Die Dauer der Impulsantwort ist von der Stärke der Bedämpfüng des Schwingkreises direkt abhängig und wird mit Hilfe einer Mikroprozessorschaltung ausgewertet.

Ein ähnlicher Schutz gegen unberechtigte Manipulation ist aus der WO 2004/021020 A1 bekannt, welcher darin besteht, dass bei einem Gehäuse für einen Zähler mittels einer plombierbaren Gehäuseabdeckung, die die Zähleranschlüsse abdeckt, mindestens eine weitere Zählervorrichtung abgedeckt ist, die mittels einer zweiten Plombierung gegen unberechtigten Zugriff schützbar ist. Die Plombierung der weiteren zu schützenden Zählervorrichtung ist so gestaltet, dass sie bei klemmendeckelfreiem Zustand frei zugänglich ist und somit visuell einfach und schnell überprüfbar ist. Hierzu weist das Zählergehäuse mindestens eine Plombieröse auf, mit der die Plombierbohrung der Zusatzabdeckung zusammenwirkt, wobei ein Plombierstift durch die mindestens eine Plombieröse und die Plombierbohrung als Bindeglied funktioniert. Dabei ist besonders vorteilhaft, wenn die mindestens eine Plombieröse von der Plombierbohrung beabstandet angeordnet ist, so dass eine Sollbruchstelle des Plombierstiftes, insbesondere ein transparenter Plombierstift, zwischen ihnen sichtbar ist.

Ein weiteres Problem entsteht bei elektronischen Zählern, welche in der Regel elektronische Schaltungen zum Messen, Quantifizieren und Anzeigen von Energieverbrauchsinformationen aufweisen, bei einem Stromausfall oder einer sonstigen Unterbrechung des elektrischen Wechselstroms zur Stromversorgung. Zu diesem Zweck sind Verfahren entwickelt worden, um kritische Daten bei Erkennung einer Unterbrechung im Wechselstrom zur Stromversorgung in einen nichtflüchtigen Speicher wie beispielsweise einen elektrisch löschbaren, programmierbaren Festwertspeicher (EEPROM - electrical erasable pro-grammable read only memory) einzuschreiben. Einige Zählvorrichtungen enthalten auch Batteriezellen, die zulassen, dass Teile der digitalen Schaltung während eines Stromausfalls in einer verringerten Betriebsart arbeiten, damit Takte und andere Schaltungen während des Stromausfalls weiterarbeiten. Um eine Zählerablesung während einer Unterbrechung der externen Wechselstromversorgung zum Zähler zu ermöglichen, ist aus der DE 600 01 358 T2 ein elektronischer Zähler bekannt, der während einer Unterbrechung des Wechselstroms zum Zähler ein von einem Bediener aktiviertes Anzeigeanforderungssignal erkennt (beispielsweise Betätigen eines Druckknopfschalters) und dann als Reaktion auf das Anzeigeanforderungssignal die Anzeige von Zählerstandsinformationen für eine begrenzte Zeitdauer bewirkt. Im Einzelnen enthält der elektronischer Zähler eine Messschaltung mit einer Energieverbrauchsschaltung, welche analoge Messsignale von Sensorschaltungen (Stromwandler, Strommesswiderstände, eingebettete Spulen oder dergleichen) erhält und rohe Energieverbrauchsdaten und andere Daten daraus bereitstellt, einem Prozessor, einem nichtflüchtigen Speicher und einer Anzeigevorrichtung. Weiterhin enthält die Messschaltung Schaltungen zur Bereitstellung von Vorstrom für die oben beschriebenen Bauteile einschließlich einer Stromversorgung, einer Stromausfallerkennungsschaltung, einer ersten Reservestromversorgung und einer zweiten Reservestromversorgung. Der Strom für die Anzeige während der Stromunterbrechung wird also durch die Reservestromversorgung bereitgestellt, wobei der zu liefernde Strom deshalb gering ist, weil die Anzeige nur als Reaktion auf ein von einem Bediener aktiviertes Anzeigeanforderungssignal betätigt wird und selbst dann die Anzeige von Zählerstandsinformationen nur für eine begrenzte Zeitdauer erfolgt. Während des normalen Betriebs kann eine erste ausgewählte Menge von Zählerstandsinformationen angezeigt werden, und während einer Wechselstromunterbrechung kann eine zweite ausgewählte Menge von Zählerstandsinfor-mationen angezeigt werden. Die erste ausgewählte Menge von Zählerstandsinformationen kann dieselbe wie die zweite ausgewählte Menge von Zählerstandsinformationen sein oder sich davon unterscheiden. Die Teile der erzeugten Zählerstandsinformationen, die die erste und die zweite ausgewählte Menge von anzuzeigenden Zählerstandsinformationen ausmachen, können vom Benutzer programmiert sein. Die vorstehend beschriebene Anordnung zur Bereitstellung einer elektronischen Anzeige von Verbrauchsinformationen während einer elektrischen Wechselstromunterbrechung kann leicht in andere Arten von elektronischen Verbrauchszählern, einschließlich von Gasuhren. Wassermessern oder sonstigen Verbrauchszählern, eingebaut werden.

Ein weiteres Problem entsteht mit der Liberalisierung des Energiemarktes, welche es dem Endverbraucher ermöglicht, den Strom von beliebigen Versorgern zu beziehen. Um eine Fernablesung zu ermöglichen, insbesondere unterschiedliche, zeitabhängige Verbrauchsmengen automatisch bearbeiten zu können, ist aus der DE 100 24 544 A1 eine Anordnung bekannt, bei der eine Datenerfassungseinrichtung mit dem Verbrauchszähler gekoppelt ist, die von diesem den Verbrauch entsprechende Verbrauchsdaten erhält, den Verbrauchsdaten eine Absolutzeitgröße zuordnet und die daraus Übertragungsdaten erzeugt, wobei die Übertragungsdaten einander zugeordnete Zeitdaten und Verbrauchsdaten aufweisen. Der Datenerfassungseinrichtung ist eine Fernübertragungsstrecke (wie beispielsweise ISDN-Datenübertragungsstrecken, Internet Verbindungen, analoge Telefonverbindungen, Funkstrecke: und sonstige geeignete Datenübertragungswege) zur Übertragung der Übertragungsdaten über eine größere Distanz nachgeschaltet. Schließlich ist mit der Fernübertragungsstrecke eine Datenverarbeitungseinrichtung zum Empfang und zur Auswertung der Übertragungsdaten gekoppelt, welche die Verbrauchsdaten abhängig von den Zeitdaten erfasst. Die Datenerfassungseinrichtung weist eine Speichereinrichtung auf, die die Übertragungsdaten sammelt, zwischenspeichert und die gesammelten Daten an die Datenerfassungseinrichtung überträgt. Die Übertragung der gesammelten Daten kann dabei zu bestimmten Zeitpunkten erfolgen, an bestimmte Ereignisse gekoppelt sein oder von der Datenbearbeitungseinrichtung oder von der Datenerfassungseinrichtung (z. B. bei einer bestimmten Datenmenge in der Datenerfassungseinrichtung) initiiert werden. Weiterhin werden neben den Übertragungsdaten auch Identifizierungsdaten zu Kennzeichnung und Identifizierung der Verbrauchszähler von der Datenerfassungseinrichtung zur Datenbearbeitungseinrichtung übermittelt. Bei Ausfall der Stromversorgung ist die Datenerfassungseinrichtung nicht ansprechbar. Die gespeicherten Daten bleiben jedoch erhalten. Die Dauer des Stromausfalls wird protokolliert und kann jederzeit abgerufen werden. Nach einem Stromausfall fordert beispielsweise die Datenerfassungseinrichtung das aktuelle Datum und die aktuelle Uhrzeit an und übermittelt der Datenbearbeitungseinrichtung eine Meldung, dass ein Stromausfall stattgefunden hat. Die internen Speicherzellen für die Zählerdaten werden ab dem Beginn des Stromausfalls mit Nullen gefüllt. Somit ist jederzeit nachvollziehbar, wie lange der Stromausfall stattgefunden hat. Als Schnittstellenprotokolle kommen auch hier insbesondere das TCP/IP- Protokoll (Transmission Control Protocol/Internet-Protocol) oder das PPP-Protokoll (PPP = Point-to-Point-Protokoll) zur Anwendung.

Ein weiteres Problem im Zusammenhang mit der Liberalisierung des Energiemarktes ist die unverschlüsselte Übermittlung von vertraulichen, personenbezogenen Daten über eine Vielzahl von Stellen, welche das Risiko birgt, dass auch Unberechtigte ohne großen Aufwand Kenntnis erlangen und die Daten missbräuchlich verwenden. Aus der DE 10 2006 030 533 A1 ist ein Verfahren zur Übertragung und Weiterverarbeitung von Informationen aus Verbrauchsmessgeräten bekannt, bei dem im ersten Schritt sämtliche relevante Informationen zum Verbrauchsmessgerät (Datum und Zeit, Gerätenummer, aktueller Verbrauchsstand, technische Stati, Eichgültigkeit, Manipulationsinformationen, Anschlussbedingungen, Temperatur etc.) durch das Verbrauchsmessgerät selbst erhoben und als digitale Information verfügbar gemacht werden. Im zweiten Schritt werden diese Informationen durch ein Verarbeitungsmodul aufgenommen und mittels eines mathematischen Algorithmus kodiert in einem Gesamtstatusbericht alphanumerisch zusammengefasst. Das Verarbeitungsmodul besteht aus einem Mikroprozessor mit einer Programmeinheit, die das Verschlüsselungsprogramm beinhaltet sowie Speichern. Der kodierte Statusbericht wird in einem nichtflüchtigen Speicher abgelegt und kann auf unterschiedliche Anforderung in vielfältiger Form zur Übermittlung bzw. Verarbeitung zur Verfügung gestellt werden. Der kodierte und sich selbst verifizierende Statusbericht kann z. B. am Verbrauchsmessgerät z. B. durch Betätigen eines Tasters in einem (LCD-) Display sichtbar gemacht werden sowie über eine Infrarot-Schnittstelle oder über eine elektrische Schnittstelle ausgegeben werden (Übermittlung über das Internet, per Funk, per Telefon (Festnetz, GSM, GPRS. UMTS etc.) sowie per Fax oder über power line communication (PLC)). Sämtliche relevanten Stamm- und Bewegungsdaten des korrespondierenden Verbrauchsmessgerätes werden in einem komplementären Auftragsmanagement- und Informationssystem zur Abwicklung von Ablese- und Verbrauchsdatenerhebungsprozessen entschlüsselt und automatisiert der planmäßigen Nutzung und Verarbeitung zugeführt.

In der Datenverarbeitung werden als elektronischer Identitätsnachweis elektronische Signaturen, zunehmend digitale Signaturen (das ist ein kryptografisches Verfahren, bei dem zu einer "Nachricht" eine Zahl berechnet wird, deren Urheberschaft und Zugehörigkeit zur Nachricht durch jeden geprüft werden können) benutzt. Digitale Signaturen basieren auf asymmetrischen Kryptosystemen und verwenden folglich ein Schlüsselpaar, das aus einem privaten (geheimen) und einem öffentlichen (nicht geheimen) Schlüssel besteht. Diese Schlüssel werden im deutschen Signaturgesetz als (privater) Signaturschlüssel und (öffentlicher) Signaturprüfschlüssel bzw. mit englischen Begriffen Private Key und Public Key bezeichnet. Bei einer digitalen Signatur wird der private Schlüssel in der Regel nicht direkt auf die Nachricht angewandt, sondern auf deren Hash-Wert, der mittels einer Hash-Funktion (wie beispielsweise SHA-1) aus der Nachricht berechnet wird. Soweit der öffentliche Schlüssel mittels eines elektronischen Zertifikats einer Person zugeordnet wurde, kann aufgrund dessen, dass es nur einen zum öffentlichen Schüssel korrespondierenden privaten Schlüssel gibt, über das öffentliche Verzeichnis des Zertifizierungsdiensteanbieters (ZDA) die Identität des Zertifizierungsstelle, welche ihrerseits wieder von höheren Stellen beglaubigt sein kann, ermittelt bzw. überprüft werden. Ein Gerät, das eine digitale Signatur mit einem Zeitstempel anfügt, ist im allgemeinen als Zeitstempelgerät bekannt. Um die digitale Signatur mit einem Zeitstempel anzufügen, ist es wesentlich, die Differenz zwischen der lokalen Zeit des Zeitstempelgeräts und der Standardzeit innerhalb eines vorbestimmten Schwellenwerts zu halten. Die lokale Zeit des Zeitstempelgeräts kann mit Hilfe einer Funkwelle, die darin als Standardzeit die falsche Standardzeit enthält, so manipuliert werden, dass sie der echten oder authentischen Zeit voraus- oder nacheilt. Um die Verfälschung der lokalen Zeit durch einen nicht autorisierten Nutzer verhindern, ist beispielsweise aus der DE 10 2005 033 162 A1 ein Zeitstempelgerät mit einem Stromversorgungsmechanismus bekannt, der den Stromverbrauch nicht nur während des "Nicht-Betriebsmodus", sondern auch nachdem das Zeitstempelgerät erstmals betriebsbereit geschaltet wurde, während der Periode reduziert, in der das Zeitstempelgerät nicht genutzt wird "Schlafmodus". Dabei muss jedoch der interne Taktgeber nicht ständig in Betrieb gehalten werden, und die Zeitkalibrierungssignale müssen nicht ständig empfangen werden. Dies ist darauf zurückzuführen, dass durch Vorsehen des Authentifizierungsschlüssels die Standardzeit von einem Zeit-Server zu einer vorbestimmten Zeit empfangen werden kann. Ferner wird ein Direktzugriffsspeicher (RAM), insbesondere ein flüchtiger Speicher genutzt, um den Authentifizierungsschlüssel zu speichern, und Strom wird ständig an das RAM geliefert, um zu verhindern, dass ein nicht autorisierter Nutzer den Authentifizierungsschlüssel erlangt. Während des "Nicht-Betriebsmodus" wird Strom nur an das flüchtige RAM geliefert, welches den Authentifizierungsschlüssel speichert. Während des "Betriebsmodus" wird Strom an alle Funktionseinheiten des Zeitstempelgeräts geliefert. Dabei entschlüsselt die eine authentische Zeit empfangende Einheit die verschlüsselte authentische Zeit unter Verwendung des Authentifizierungsschlüssels, der in der den Authentifizierungsschlüssel speichernden Einheit gespeichert ist. Entsprechend einer Ausführungsform modifiziert ein Zeitmodifizierungsprozessor die lokale Zeit mit Hilfe einer Funkwellenzeit, und ein Zeitkorrekturprozessor empfängt bei Erfüllung vorbestimmter Bedingungen eine authentische Zeit von einem Zeit-Server, um die lokale Zeit zu korrigieren Während des "Schlafmodus" wird mittels eines Stromversorgungs-Controllers die Stromversorgung zum Empfänger für Zeitkalibrierungssignale und der Anzeigeeinheit unterbrochen. Falls ein nicht autorisierter Nutzer versucht, das Zeitstempelgerät zu demontieren, um in den Besitz des Authentifizierungsschlüssels zu gelangen, wird die Stromversorgung zum Speicher (RAM) unterbrochen, und der gespeicherte Authentifizierungsschlüssel wird ebenfalls gelöscht

Weiterhin ist aus der DE 102 04 065 A1 ein Verfahren und eine Anordnung zur Authentifizierung und Integritätssicherung von Verbrauchsmesswerten bekannt. Dabei erfolgt die Übermittlung von bereitgestelltem Datensatz und/oder Kontroll-Code und/oder Identitäts-Kontroll-Code über ein öffentliches Netz, beispielsweise das Stromversorgungsnetz und/oder Internet und/oder Telefonnetz und/oder GSM-Netz und/oder UMTS-Netz. Die durch ein individuell gekennzeichnetes Datenerfassungsinstrument erfassten Daten sind Verbrauchsmesswerte von Strom, Gas, Wasser. Darüber hinaus erweist es sich als vorteilhaft, dass der Kontroll-Code einer vorgebbaren Anzahl von Datensätzen in dem Datenerfassungsinstrument abrulbar gespeichert und dass der Identitäts-Kontroll-Code in der die Beglaubigung des individuell gekennzeichneten Datenerfassungsinstruments vornehmenden Prüfstelle archiviert wird. Eine Ausführungsform des Verfahrens sieht vor, dass eine Kontrolle der Integrität eines übermittelten Datensatzes erfolgt, indem dem übermittelten Datensatz erneut automatisch ein Kontroll-Code zugewiesen wird, wobei dieser erneut zuzuweisende Kontroll-Code auf dieselbe Weise wie der vor der Übermittlung dem Datensatz zugewiesene Kontroll-Code generiert wird, und anschließend der neu erzeugte Kontroll-Code mit dem übermittelten und/oder mit dem in dem individuell gekennzeichneten Datenerfassungsinstrument gespeicherten, vor der Übermittlung dem Datensatz zugewiesenen Kontroll-Code verglichen wird. Im einzelnen umfasst die Anordnung Mittel zum Einlesen von Daten, einen Zufallszahlengenerator, Mittel zum Empfang von Steuersignalen zur Aktivierung/ Deaktivierung eines Zufallszahlengenerators, Mittel zur Verknüpfung der eingelesenen Daten mit durch den Zufallszahlengenerator erzeugten Zufallszahlen, Mittel zur Berechnung eines die eingelesenen Daten oder die mit den Zufallszahlen verknüpften eingelesenen Daten kennzeichnenden Kontroll-Codes und Mittel zur Ausgabe des Kontroll-Codes. Weiterhin umfasst die Anordnung mindestens ein Sicherungselement, welches unberechtigte Eingriffe in die Anordnung verhindert oder anzeigt, Mittel zur Wiedergabe von Daten in Form eines Displays, Mittel zur Datenspeicherung und/oder Mittel zur Eingabe von Steuerbefehlen für den Zugriff auf den Datenspeicher und/oder für die Wahl der wiederzugebenden Daten. Wie aus vorstehender Würdigung hervorgeht wird beim Verfahren und bei der Anordnung zur Authentifizierung und Integritätssicherung von Verbrauchsmesswerten gemäß der DE 102 04 065 A1 davon ausgegangen, dass in dem Zähler entweder die übertragenen Messwerte oder der dazu gehöriger Kontrollcode im Messgerät gespeichert wird. Nur was innerhalb des Messgerätes gespeichert ist, wird auf dessen Display dargestellt.

Schließlich ist aus der DE 199 30 263 A1 ein Verfahren und eine Vorrichtung zur Datenübertragung zwischen einem elektromedizinischen Implantat und einem externen Gerät für die Überwachung des Zustand des betreffenden Patienten bekannt. Bei solchen elektromedizinischen Implantaten handelt es sich beispielsweise um Herzschrittmacher, Defibrillatoren, Kardioverter oder andere elektronisch betätigte bzw. gesteuerte Implantate. Um ein Verfahren zur Verfügung zu stellen, das einen energiesparenderen Betrieb des Implantats ermöglicht, wird ein Auslösesignal stets von einer ersten, implantierten Sender/Empfängereinheit, d. h. der Sender/Empfängereinheit des Implantats ausgesendet, wobei wenigstens die Empfangsbereitschaft einer ersten Sender/Empfängereinheit nach Aussenden des Auslösesignals für ein zweites Zeitintervall aufrechterhalten wird. Die Empfangsbereitschaft der ersten Sender/Empfängereinheit des Implantats wird nur für einen gewissen Zeitraum aufrechterhalten, der kürzer ist als der Zeitraum bis zum nächsten Auslösesignal, so dass zumindest der Empfängerteil, vorzugsweise auch der Senderteil, der ersten Sender/Empfängereinheit vor dem nächsten Auslösesignal ausgeschaltet wird und somit keine Energie verbraucht. Je nachdem, wie das Verhältnis zwischen Empfangs- und Ruhephasen ausfällt, lässt sich hierdurch eine beträchtliche Energieeinsparung erzielen. Weiterhin ist vorgesehen, dass das externe Gerät eine erste Plausibilitätsprüfung der von der ersten Sende/Emplängereinheit übertragenen Daten durchführt. Hierbei können bestimmte Kontroll-Bits der gesendeten Datensätze nach bestimmten Kriterien überprüft werden. Die erste Quittung enthält dann in Abhängigkeit von der Plausibilität der übertragenen Daten eine zweite Steuerinformation zur Steuerung der ersten Sende/Empfängereinheit. Bei mangelnder Plausibilität der übertragenen Daten enthält die zweite Steuerinformation ein erstes Steuersignal zum Auslösen einer erneuten Übertragung von Daten durch die erste Sende/Empfängereinheit. Hierdurch wird in vorteilhafter Weise eine Erhöhung der Übertragungssicherheit erzielt, da wahrscheinlich fehlerhaft übertragene Daten erneut angefordert werden. Eine weitere Erhöhung der Wahrscheinlichkeit der Datenauthentizität wird dadurch erzielt, dass die zweite Sende/Empfängereinheit zur Kontrolle der Übertragung der Daten durch das Implantat bei vorhandener Plausibilität der übertragenen Daten wenigstens einen Teil der übertragenen Daten an die erste Sende/ Empfängereinheit zurücksendet. Stimmen diese nicht mit den gesendeten Daten überein, ist die Wahrscheinlichkeit hoch, dass auch schon bei der Übertragung an die zweite Sende/Empfängereinheit ein Fehler aufgetreten ist. Vorzugsweise sendet das Implantat nach der Kontrolle der Übertragung der Daten über die erste Sende/Empfängereinheit eine zweite Quittung an die zweite Sende/Empfängereinheit. Diese zweite Quittung enthält bei Feststellung einer erfolgreichen Übertragung der Daten eine die Gültigkeit der Übertragung repräsentierende erste Signatur. Im Anschluss an diese Sendung stellt das Implantat wenigstens die Empfangsbereitschaft der ersten Sende/Empfängereinheit, vorzugsweise auch die Sendebereitschaft, ab. Die erneute Abgabe eines Auslösesignals markiert dann den Ablauf der Ruhephase, die hierdurch insoweit hinsichtlich ihrer Dauer optimiert ist. Weiterhin führt das externe Gerät zur weiteren Erhöhung der Wahrscheinlichkeit der Datenauthentizität eine zweite Plausibilitätsprüfung der zweiten Quittung durch. Bei festgestellter mangelnder Plausibilität der zweiten Quittung wird nach Ablauf eines weiteren Zeitintervalls nach Absendung der zweiten Quittung eine erneute Abfrage des Implantats durchführt. Dabei nimmt das Implantat nach Ablauf des weiteren Zeitintervalls die Empfangs- und Sendebereitschaft der ersten Sende/Empfängereinheit für ein erneutes weiteres Zeitintervall auf, das ausreicht, um eine Anfrage vom externen Gerät aufzunehmen und zu beantworten. Weiterhin erfolgt dabei die Beantwortung der Anfrage durch erneutes Senden der zweiten Quittung und/oder der zuletzt gesandten Daten. Hierdurch ist sichergestellt, dass entsprechend kurze vorübergehende Störungen geringeren Einfluss haben. Zudem kann anhand eines Vergleichs der im externen Gerät dann doppelt vorliegenden zweiten Quittung und/ oder der zuletzt gesandten Daten entschieden werde, ob der Datensatz als gültig angenommen werden kann. Bevorzugt erfolgt auch hier bei Feststellung einer fehlerhaften Übertragung der Daten eine erneute Übertragung von Daten durch die erste Sende/Empfängereinheit, sofern eine zur Vermeidung einer Überbeanspruchung der Energieversorgung des Implantats ausreichend geringe Anzahl erneuter Übertragungen nicht überschritten ist. Für die SMS-Übertragung wird ein 128 Bit DES Verschlüsselungsverfahren angewendet, das auf einem private-public key System basiert. Die Verschlüsselung wird softwaremäßig realisiert, d. h. es wird kein Verschlüsselungs-IC verwendet. Auf dem Weg vom Implantat zum externen Gerät ist auf diesem speziellen technischen Gebiet der Medizintechnik wegen der kurzen Reichweite zusätzlich zu der implantatspezifischen Kodierung der Daten keine weitere Verschlüsselung mehr notwendig.

Vom Stand der Technik her gesehen sind also verschiedene Systeme zur Auslesung von Zählerdaten bekannt, die heutzutage meist unter dem Begriff AMM-Systeme (AMM: Automatic Meter Management) zusammengefasst werden. Der Begriff AMM ersetzt dabei weitgehend den länger bekannten Begriff AMR (Automatic Meter Reading) (im Deutschen auch als ZFA (Zählerfemauslesung) bezeichnet), da gegenüber der anfangs betrachteten Hauptfunktionalität der Datenauslesung einige neue Features hinzugefügt wurden. Hauptaugenmerk der Entwicklung ist jedoch der Schutz vor Manipulationen für den Endverbraucher/-kunden bzw. die eindeutige, automatische, störungs- und fehlerfreie Übermittlung und Zuordnung der Verbrauchswerte zum jeweiligen Verbrauchszähler, um auf deren Basis in der Abrechnungsstelle des jeweiligen Versorgungsunternehmens (Abrechnungs-zentrale) die Verbrauchsabrechnungen erstellen zu können. In der Regel sind die Geräte für das Energieversorgungsunternehmen also derart ausgestaltet, um Verbrauchsdaten vom Ort des Entstehens (also beim Endkunden, z.B. Heimbereich, aber auch Industrie oder Kommunen), möglichst einfach und kostengünstig zu erfassen (Ressourcenzähler z.B. Strom-, Wasserzähler) und ebenfalls möglichst einfach und kostengünstig an eine Zentrale zu überträgen (Kommunikationsverfahren), wo Sie in automatisierten Abrechnungen für die oben genannten Endkunden verarbeitet werden können. Der Anwender ist immer das Energieversorgungsunternehmen, welches die Ressourcenzähler beschafft, beim Kunden einbaut, wartet, abliest; das Gleiche gilt für die Kommunikationseinrichtungen. Die Verbrauchszählerdaten werden beim vorstehend gewürdigten Stand der Technik stets an eine Zentrale zur Abrechnung zu übertragen, bzw. es werden eventuelle Störungen, beispielsweise Leckagen, an eine Zentrale gemeldet. Wenig Beachtung fand jedoch der Personenkreis der Endkunden, z.B. im Heimbereich. Deshalb fehlt in der Praxis ein Verbrauchszähler und ein Verfahren zur Erkennung von Manipulationen, welcher/s unabhängig von anderen technischen Gegebenheiten universell einsetzbar ist und welcher/s dem Kunden die Möglichkeit der Selbstüberwachung (Verbrauch / Leckage u.a.) vor Ort gegeben. Besonders bedeutsam ist dies, weil die Messgeräte herstellende Industrie als äußerst fortschrittliche, entwicklungsfreudige Industrie anzusehen ist, die schnell Verbesserungen und Vereinfachungen aufgreifen und in die Tat umsetzen.

Der Erfindung liegt die Aufgabe zugrunde, ein Messgerät mit Datenkommunikation zu mindestens einem System derart auszugestalten, dass die Möglichkeit zur Identifizierung vom System zurückgelieferter Messdaten als die eigenen, einschließlich zur Überprüfung auf Manipulation geschaffen wird.

Diese Aufgabe wird, gemäß Patentanspruch 1, durch ein Messgerät, mit Datenkommunikation zu mindestens einem System mit der Möglichkeit vom System über die Datenkommunikation zurückgelieferte Messdaten als die eigenen zu identifizieren und eine Manipulation der Messwerte auszuschließen und somit diese zurückgelieferten Messdaten vertrauenswürdig zur weiteren Verarbeitung/Auswertung oder Anzeige bereitzustellen, welches aufweist:
- mindestens eine Kommunikationsschnittstelle zu Komponenten eines Systems, welches mindestens in der Lage ist, signierte und oder verschlüsselte Messwerte zu empfangen, in einem Speicher aufzubewahren und zurückzuliefern, als auch Zeitinformationen bezogen auf eine Zeitreferenz anzubieten,
- mindestens ein Messmodul, welches den von mindestens einem Sensor gelieferten Messsignalen Energiemesswerte oder Zählerstände zuordnet,
- mindestens einen Speicher für den zuletzt ermittelten Energiemesswert oder Zählerstand (kurz: Messwert),
- mindestens einen Speicher für den Zeitstempel, welcher im Zeitmodul zu dem zuletzt erzeugten Messwert ermittelt wurde,
- mindestens ein Zeitanpassungsmodul, welche die über die Kommunikationsschnittstelle vom System angebotene Zeit überprüft und die lokale Zeit im Zeitmodul nachführt,
- mindestens einen Speicher für eine dem Messgerät zugewiesene Identifikation,
- mindestens einen Speicher für den oder die zum Verschlüsseln und / oder Signieren benötigten Schlüssel,
- mindestens einen Verschlüsselungs- und / oder Signatur-Kodierer, welcher unter Verwendung der Schlüssel im Schlüsselspeicher die den vorgenannten Speichern angebotenen Informationen einschließlich der Gültigkeits- und Vertrauenskennzeichen mit Informationen zur Überprüfung der Unversehrtheit der Daten versieht, in einem aktuellen Datensatz zusammenfasst und mindestens der Kommunikationsschnittstelle zur Übertragung übergibt, wobei nur ein Teil der letzten Datensätze oder deren Inhalt im Messgerät gespeichert werden, und
- mindestens einen Verschlüsselungs- und / oder Signatur-Dekodierer, welcher unter Verwendung der Schlüssel im Schlüsselspeicher, die über die Kommunikationsschnittstelle gelieferten Datensätze mit Messwerten auf Unversehrtheit des Dateninhalts und die Identifikation des Messgeräts überprüfen kann, und bei erfolgreicher Überprüfung diese Daten zur weiteren Verarbeitung/Auswertung oder Anzeige bereitzustellen,
gelöst.

Weiterhin wird diese Aufgabe erfindungsgemäß bei einem Verfahren zur Erkennung von Manipulationen bei einem Messgerät, welches zugelassen und / oder eichrechtlich geprüft wird, nach Patentanspruch 6 gelöst, bei dem
- Datenpakete generiert werden, die mindestens eine Identifikation, einen Zeitwert, einen Messwert und eine Signatur enthalten,
- diese Datenpakete an ein System oder Komponenten des Systems übergeben werden, welche nicht zugelassen und /oder eichrechtlich geprüft sind, welche diese Datenpakete oder die relevanten Teile speichern und welche diese Datenpakete oder relevanten Teile auf Aufforderung vom Messgerät an dieses zurückliefen,
- die Datenpakete oder deren Inhalt zwischenzeitlich nicht im Messgerät gespeichert werden,
- das Messgerät die vom System oder Komponenten des Systems gelieferten Datenpakete oder deren relevanten Inhalt anhand von Schlüssel und Signatur mit nachgewiesener Sicherheit darauf überprüfen kann, dass die Daten des Datenpakets nicht verändert wurden und von diesem Messgerät stammen und
- diese erfolgreich geprüften Daten an einer eichrechtlich zugelassenen Anzeige mit demselben Vertrauensstatus, wie Messwerte, welche das Messgerät nicht verlassen haben, dargestellt werden.

Das erfindungsgemäße Messgerät bzw. das erfindungsgemäße Verfahren weisen im Vergleich zum Stand der Technik den Vorteil einfacherer Prozesse und niedrigerer Kosten auf, da die Daten in nicht zugelassenen Geräten oder Systemen gespeichert werden können, z.B. Messwertdatenbank des Netzbetreibers in einem Rechenzentrum. Weiterhin ist von Vorteil, dass Wertepaare, nämlich Zählerstand und Zeitstempel, für die nachgelagerte Tarifbildung verwendet werden können, so dass die relevanten Wertepaare z.B. auch auf einer Rechnung mit ausgegeben werden können. Insbesondere kann die Korrektheit der Wertepaare mit einfachen Hilfsmitteln, z.B. Taster am Zähler zum Durchblättern von Messwerten, direkt vom Kunden überprüft werden, ohne dass der Kunde gezwungen ist die lange Liste von allen an den Netzbetreiber übermittelten Messwerte darzustellen und die rechnungsrelevanten Daten herauszusuchen. Die Messgeräte erzeugen eine Vielzahl von Messdaten (z.B. Zählerstandsprofil mit einem Wert pro 15 min.), welche an ein überlagertes System übertragen werden. Die nachgelagerte Tarifierung entscheidet abhängig von dem mit dem Kunden geschlossenen Vertrag, welche Werte nun für die Abrechnung relevant sind und auch auf der Rechnung mit ausgegeben (ausgedruckt bei Papierform) werden. Für die Überprüfung der Abrechnungswerte genügt es - ist vielmehr sogar wesentlich angenehmer als beispielsweise aus 96 Werten pro Tag die 2 bis 4 relevanten Werte herauszusuchen - wenn der Zähler nur die verwendeten Werte anzeigt. Dies ist erfindungsgemäß einfach zu realisieren, da das überlagerte System auf Anforderung des Kunden (z.B. Taster am Zähler oder Kommunikationsmodul) nur die verwendeten Abrechnungswerte zurückliefert und in diesen zurückgeblättert wird. Durch die vorhandene Signatur, kann der Zähler sicherstellen, dass er nur unmanipulierte Werte von sich selbst auf seinem Display anzeigt, obwohl diese Werte nicht innerhalb des Messgerätes gespeichert wurden. Somit können erfindungsgemäß die Messgeräte wesentlich einfacher werden, da diese gerade keinen Messwert- oder Kontrollcodespeicher beinhalten müssen. Weiterhin ist von Vorteil, dass der Kunde dem Zähler vertraut, da durch PTB oder vergleichbare Organisationen sichergestellt wird, dass nur gültige und richtige Daten angezeigt werden (welche aus dem eichrechtlich geprüften Teil des Messgeräts/Zählers kommen).

Bei einer bevorzugten Ausgestaltung der Erfindung weist, gemäß Patentanspruch 2, das Messgerät eine Kundenschnittstelle auf und übergibt über diese auf Unversehrtheit des Dateninhalts und der Identifikation überprüfte Datensätze an ein beliebiges, geeignetes Gerät des Kunden, welches über eine eigene Anzeige verfügt oder zur Weitergabe an ein Gerät mit Anzeige dient.

Diese Ausgestaltung der Erfindung weist den Vorteil auf, dass über die am Zähler vorhandene und von der Physikalisch-Technische Bundesanstalt PTB ebenfalls geprüften Kundenschnittstelle der Kunde mit Geräten seiner freien Wahl (z.B. Lesekopf mit USB-Schnittstelle (Universal Serial Bus) und PC-Software vom Versandhandel) die geprüften Daten direkt auslesen und weiterverarbeiten kann.

In Weiterbildung der Erfindung wird, gemäß Patentanspruch 5, als Zeitreferenz eine von Zeitinstituten koordinierte Weltzeit UTC, insbesondere die UTC (PTB) der Physikalisch-Technische Bundesanstalt (Deutschland) benutzt.

Weitere Vorteile und Einzelheiten lassen sich der nachfolgenden Beschreibung von bevorzugten Ausführungsformen der Erfindung unter Bezugnahme auf die Zeichnung entnehmen. In der Zeichnung zeigt:
- **FIG. 1**: das Blockschaltbild eines Messgeräts in der Ausgestaltung als Energiezähler,
- **FIG. 2**: den Ablaufplan für eine Ausgestaltung des Energiezählers nach FIG. 1 in der Ausführungsform ohne Taster und *bei* Benutzung zweier optischer Schnittstellen,
- **FIG. 3**: den Ablaufplan für eine Ausgestaltung des Energiezählers nach FIG. 1 in der Ausführungsform mit Taster und Benutzung einer optischen Schnittstelle am Kommunikationsmodul,
- **FIG**. **4**: den Ablaufplan für eine Ausgestaltung des Energiezählers nach FIG. 1 mit verifizierter Datenausgabe an Kundenschnittstelle oder Anzeige und
- **FIG. 5**: verschiedene Ausführungsformen der Anbindung von Energiezählern nach der Erfindung.

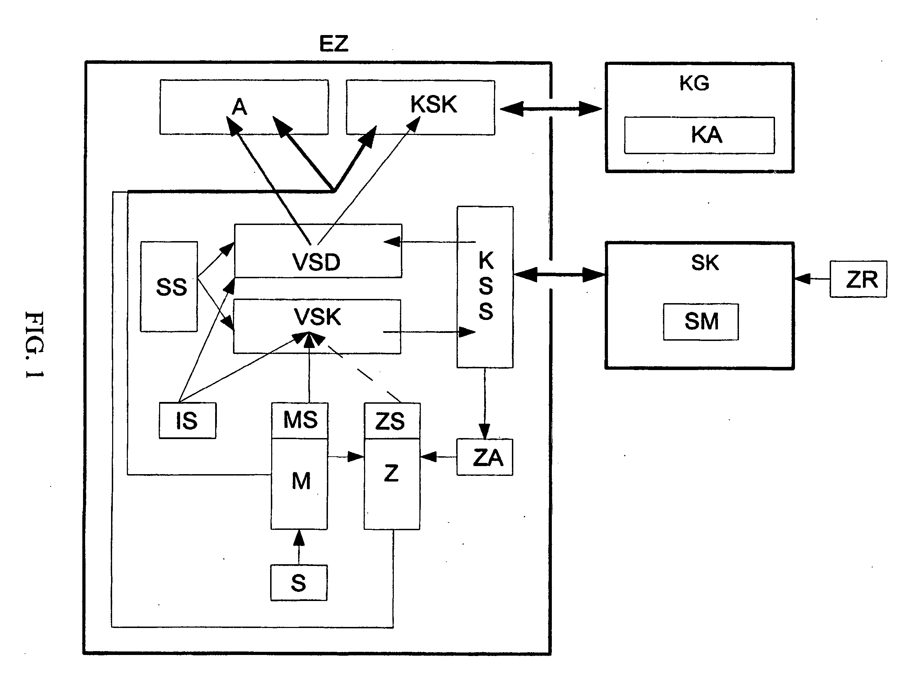

**FIG. 1** zeigt das Blockschaltbild einer bevorzugten Ausführungsform des erfindungsgemäßen Messgeräts EZ, dessen Bedienung für den Benutzer sehr einfach und ohne EDV-Kenntnisse durchführbar ist. Auch wenn nachfolgend die Ausgestaltung der erfindungsgemäßen Lösung für den Einsatz bei einem Energiezähler EZ beschrieben ist, so ist der Einsatz des Messgeräts EZ und des Verfahrens auch bei anderen Geräten mit entsprechenden Schnittstellen, beispielsweise zur Messung der Energieeinspeisung von Solaranlagen in das Energieversorgungsnetz, möglich.

Dies ist darauf zurückzuführen, dass das erfindungsgemäße Konzept auf Konfigurierbarkeit aufbaut, eine einheitliche, geräteunabhängige Fehlerbehandlung ermöglicht, und die einfache Anpassung an die jeweiligen Gegebenheiten und Einbindung ohne Änderung der Erfindung bzw. des Grundkonzepts erlaubt. Das System beruht neben der Hauptfunktionalität der Messwerterfassung, des Zählens, im Wesentlichen auf einer Kommunikation nach außen. Diese Kommunikation kann verschiedene Schnittstellen beinhalten, insbesondere eine Schnittstelle KSS zur Auslesung der Daten, wie beispielsweise Fernauslesung der Daten, die hauptsächlich zur Abrechnung der Energie durch das EVU dienen, und zum anderen eine Kundenschnittstelle KSK zur Überwachung des Verbrauchs und Überprüfung der Rechnungen vom EVU. Für die Schnittstellen sind im Rahmen der Erfindung verschiedene Ausführungen möglich, z.B. für Schnittstelle zum EVU die Kommunikation via PLC, GPRS, oder eine Kombination mehrere Kommunikationstechnologien. Die Kundenschnittstelle KSK kann als Display A oder als PC-Schnittstelle ausgeführt sein, oder z.B. auch die Daten über eine andere Kommunikationstechnologie an ein Kundengerät KG liefern, wie beispielsweise einen USB-Stick.

**FIG. 1** zeigt einen Energiezähler EZ mit Datenkommunikation zu mindestens einem System mit der Möglichkeit vom System über die Datenkommunikation zurückgelieferte Messdaten als die eigenen zu identifizieren und eine Manipulation der Messwerte auszuschließen und somit diese zurückgelieferten Messdaten vertrauenswürdig auf einer eigenen Anzeige A darzustellen. Hierfür weist der Energiezähler EZ mindestens eine Kommunikationsschnittstelle KSS zu Komponenten SK eines Systems auf, welches mindestens in der Lage ist, signierte und/oder verschlüsselte Messwerte zu empfangen, in einem Speicher SM aufzubewahren und zurückzuliefern, als auch Zeitinformationen bezogen auf eine Zeitreferenz ZR anzubieten. Die Zeitreferenz ZR kann insbesondere über den NTP-Server der PTB in Braunschweig bezogen werden. Vorzugsweise besteht das Messgerät/der Zähler EZ aus zwei Baugruppen, nämlich einem Messmodul M und einem Sensormodul S. Dabei ordnet das Messmodul M den von dem Sensormodul S gelieferten Messsignalen Energiemesswerte oder Zählerstände zu. Weiterhin sind folgende Speicher vorgesehen, nämlich mindestens ein Speicher MS für den zuletzt ermittelten Energiemesswert oder Zählerstand (kurz: Messwert), mindestens ein Speicher ZS für den Zeitstempel, welcher im Zeitmodul Z zu dem zuletzt erzeugten Messwert ermittelt wurde, mindestens ein Zeitanpassungsmodul ZA, welche die über die Kommunikationsschnittstelle KSS vom System angebotene Zeitreferenz ZR überprüft und die lokale Zeit im Zeitmodul Z nachführt, mindestens ein Speicher IS für eine dem Messgerät/ Energiezähler EZ zugewiesene Identifikation und mindestens ein Speicher SS für den oder die zum Verschlüsseln und / oder Signieren benötigten Schlüssel. Dabei ist vorzugsweise im Identifikations-Speicher IS eine Seriennummer oder eine Eigentumsnummer des Systembetreibers gespeichert. Weiterhin weist der Energiezähler EZ mindestens einen mit den Speichern SS, IS, MS, ZS verbundenen Verschlüsselungs- und / oder Signatur-Kodierer VSK auf, welcher - unter Verwendung der Schlüssel im Schlüsselspeicher SS - die im Identifikations-Speicher IS, Messwert/Zählerstandzwischenspeicher MS und Zeitstempelspeicher ZS angebotenen Informationen einschließlich der Gültigkeits- und Vertrauenskennzeichen mit Informationen zur Überprüfung der Unversehrtheit der Daten versieht und in einem (aktuellen) Datensatz zusammenfasst und mindestens der Kommunikationsschnittstelle KSS zur Übertragung übergibt. Dabei können auch verschiedene Gültigkeit und Vertrauenskennzeichen in ein Statuswort zusammengefasst werden. Erfindungsgemäß werden die früheren Datensätze oder deren Inhalt (beispielsweise älter als die fünf letzten) nicht im Messgerät EZ gespeichert. Schließlich ist mindestens ein Verschlüsselungs- und / oder Signatur-Dekodierer VSD vorgesehen, welcher unter Verwendung der Schlüssel im Schlüsselspeicher SS, die über die Kommunikationsschnittstelle KSS gelieferten Datensätze mit Messwerten auf Unversehrtheit des Dateninhalts und die Identifikation des Messgerät/Energiezähler EZ überprüfen kann, und bei erfolgreicher Überprüfung diese Daten auf der Anzeige A darstellt. Zur Steuerung der Ausgabe an der Anzeige A, Auswertung von Steuersignalen, insbesondere der Betätigung eines Tasters (in der Zeichnung nicht dargestellt) oder Abspeicherung der synchronisierten lokalen Zeit, Vergrößern oder Verkleinern der aktuellen Zykluszeit u.a. ist mindestens eine Steuereinrichtung mit Programmspeicher (in der Zeichnung nicht dargestellt) vorgesehen.

Weiterhin weist das erfindungsgemäße Messgerät/Energiezähler EZ eine Kundenschnittstelle KSK auf und übergibt über diese auf Unversehrtheit des Dateninhalts und der Identifikation überprüfte Datensätze bzw. Datenpaket an ein beliebiges, geeignetes Gerät KG des Kunden, welches über eine eigene Anzeige KA verfügt oder zur Weitergabe an ein Gerät mit Anzeige dient. In **FIG. 1** ist die Ausgabe an der Anzeige A bzw. über die Kundenschnittstelle KSK durch entsprechende Pfeillinien - ausgehend vom Verschlüsselungs- und / oder Signatur-Dekodierer VSD, welcher wiederum mit der Kommunikationsschnittstelle KSS und dem Schlüsselspeicher SS verbunden ist - dargestellt.

Das Zeitmodul Z, führt die lokale Zeit und das Datum, wobei als Zeitreferenz ZR eine von Zeitinstituten koordinierte Weltzeit UTC, insbesondere die UTC (PTB) der Physikalisch-Technische Bundesanstalt (Deutschland) und das Network Time Protocol NTP zur Übertragung einer Zeitreferenz ZR vom System über ein öffentliches Netz zum Messgerät/Energiezähler EZ benutzt werden kann. Das Zeitmodul Z ist hierzu mit dem Zeitanpassungsmodul ZA verbunden, welches wiederum mit der Kommunikationsschnittstelle KSS verbunden ist. Durch die strichlinierte Pfeillinie in **FIG. 1** ist das Hinzufügen des Zeitstempels ZS zum zuletzt erzeugten Messwert (vom Messmodul M bzw. Speicher MS) im Verschlüsselungs- und/oder Signatur-Kodierer VSK darge-stellt; gleiches wird durch die dick gezogenen Pfeillinien ausgehend vom Mess-modul M/Zeitmodul Z zur Anzeige A/Kundenschnittstelle KSK verdeutlicht.

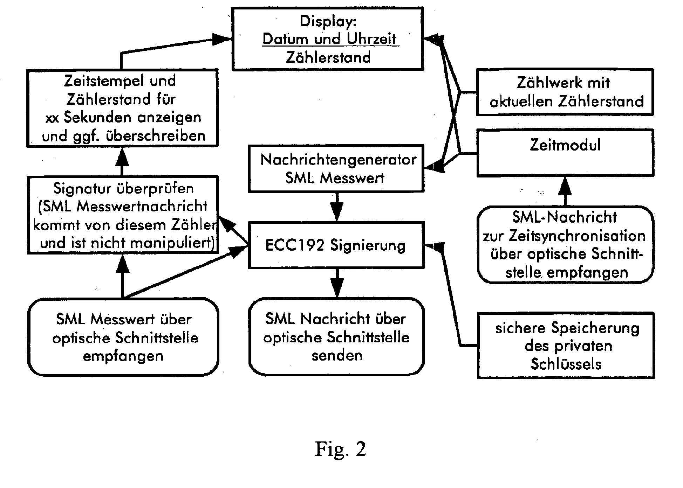

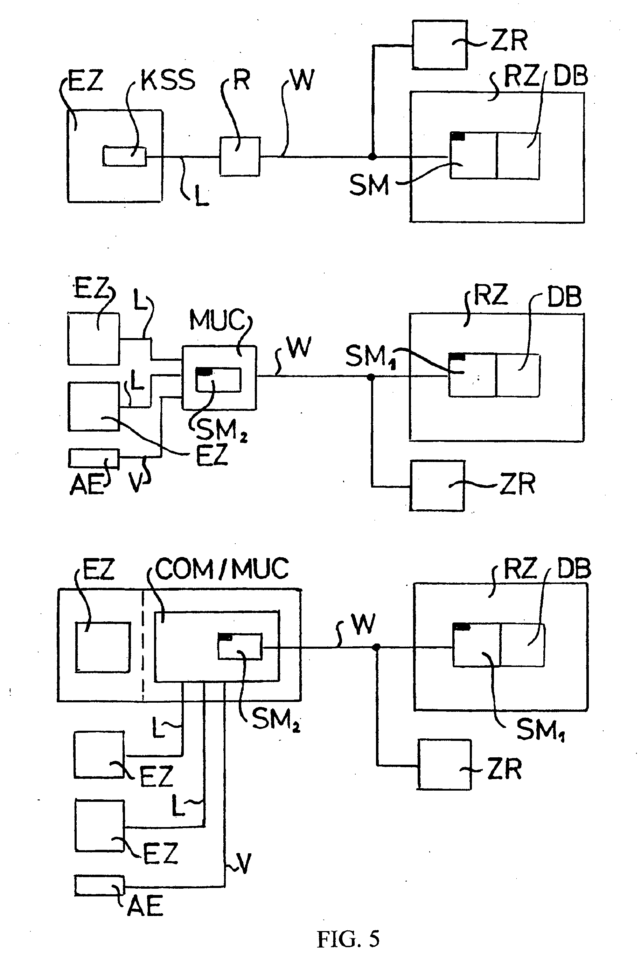

Die Kommunikation des Energiezählers EZ zum einen über die Schnittstelle KSS zur Fernauslesung der Daten, die hauptsächlich zur Abrechnung der Energie durch das Energieversorgungsunternehmen EVU dienen, und zum anderen über die Kundenschnittstelle KSK zur Überwachung des Verbrauchs und Überprüfung der Rechnungen vom EVU auf logischer und physikalischer Ebene ist in **FIG. 2** bis **FIG. 5** dargestellt. Die Daten werden aus lokaler Datenbank oder (bei leistungsstarker Kommunikation) aus Remote-Datenbank geholt (bei Netz- oder Messstellenbetreiber RZ, siehe **FIG. 5****).** Erfindungsgemäß wird für die Überprüfung der Daten kein Public Key (Public Key ist beispielsweise 192 Bit=24Byte bin = 48 Hex-Zeichen lang) benötigt, sondern es kann die vorhandene Signier-Methode und der Private Key verwendet werden. Das ist darauf zurückzuführen, dass die Schnittstelle (KSS) am Zähler EZ ist, daher nicht von EVU beeinflussbar ist und dadurch Daten nach außen weitergegeben werden können, ohne dass ein Public Key einzustellen oder zu übergeben ist. Damit ist ohne Public Key-Verteilung an den Kunden ein System schnell aufbaubar, das mit einfachen Mitteln dem Kunden erlaubt, die für Abrechnung verwendeten Daten zu überprüfen, z.B. durch Tastendruck am Zähler (zurückblättern), als auch die Übergabe von nicht manipulierbaren Daten an ein Display oder PC des Kunden (siehe KG in **FIG. 1****).** Somit kann das Messgerät/ der Zähler EZ über die Schnittstelle KSS Messwert(e) empfangen, überprüfen ob dieser/diese von ihm kommt/kommen und nicht manipuliert ist/sind und diesen/diese auf einem Display A darstellen, d.h. Daten, die den Zählerbereich bereits verlassen haben (also den eichrechtlich relevanten Teil - Metering Board). Weiterhin ist von Vorteil, dass das erfindungemäße Konzept von der Smart Message Language SML auch auf Device Language Message Specification DLMS erweiterbar ist.

**FIG. 2** zeigt den Ablaufplan für eine Ausgestaltung des Energiezählers EZ nach **FIG. 1** in der Ausführungsform ohne Taster und bei Benutzung zweier optischer Schnittstellen (KSS). Erfindungsgemäß erfolgt die Erzeugung vom SML-Nachrichten aus Identifikation (im Speicher IS), Messwert (im Speicher MS) und Zeitstempel (im Speicher ZS) sowie die Signierung (im Verschlüsselungs- und / oder Signatur-Kodierer VSK) dieser Nachricht mit dem Verfahren ECC192 (Elyptic Curve Cryptography mit einer Signaturlänge von 192 Bit) und Übertragung über die optische Schnittstelle KSS. Erfindungsgemäß sind folgende Funktionen/Komponenten vorgesehen:
- Zeitmodul Z,
- eingehende SML-Kommunikation zum Stellen der Uhrzeit,
- sichere Speicherung des privaten Schlüssels für die Signierung (keine Auslesemöglichkeit für EVU),
und optional ist vorgesehen:
- Display/Anzeige A mit der Möglichkeit zur Anzeige von Datum, Messwert und Zeit.

Erfindungsgemäß ist das Messgerät/Energiezähler EZ in der Lage SML-Messwertnachrichten zu empfangen, kann die Signatur auf Gültigkeit überprüfen und bestätigen, dass dieser Tripel (Identifikation, Messwert und Zeitstempel) von Ihm kommt und nicht verändert wurde. Nur in diesem Fall ist es erfindungsgemäß möglich diesen Wert für eine bestimmte Zeit (z.B. 20 Sekunden) auf dem Display A anzeigen.

Somit können einem Kunden auf Anforderung (z.B. Taster an dem Modem) abrechnungsrelevante Daten dargestellt werden. Da das Messgerät/Energiezähler EZ nur von ihm signierte Werte anzeigt, ist eine Manipulation der Daten beim Messstellenbetreiber, Netzbetreiber oder Stromlieferant ausgeschlossen. Insbesondere weisen das erfindungsgemäße Messgerät bzw. das erfindungsgemäße Verfahren im Vergleich zum Stand der Technik den Vorteil einfacherer Prozesse und niedrigerer Kosten auf, da die Daten in nicht zugelassenen Geräten oder Systemen (und nicht zwischenzeitlich die Datenpakete oder deren Inhalt im Messgerät/Energiezähler EZ gespeichert werden) gespeichert werden können. Das Vertrauen des Kunden in die Anzeige A bzw. Kundenschnittstelle KSK des Zählers EZ wird durch die Eichbehörde sichergestellt. Eine Schlüsselverwaltung für die Signierung mit Übergabe des ,public key' im Kuvert bei Installation des erfindungsgemäßen Messgerät/Energiezähler EZ ist nicht notwendig, was im Vergleich zum Stand der Technik die Handhabung deutlich erleichtert (keine Schlüsselverwaltung).

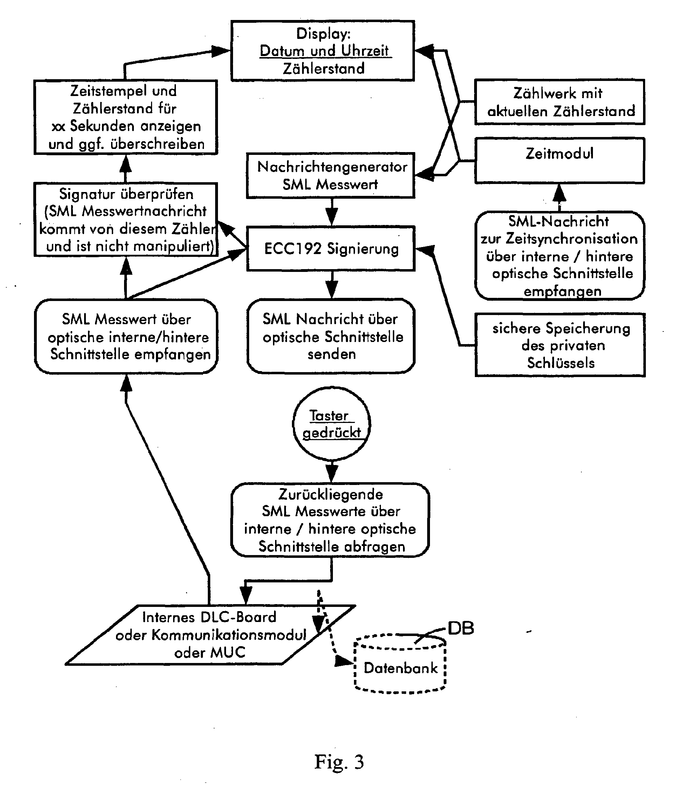

**FIG. 3** zeigt den Ablaufplan für eine Ausgestaltung des Messgeräts/Energiezählers EZ nach
**FIG. 1** in der Ausführungsform mit Taster und Benutzung von optischen Schnittstellen zum Kommunikationsmodul. Mit einem Taster im Messgerät/Energiezähler EZ erhöht sich das Vertrauen des Kunden in die am Display/Anzeige A angezeigten Daten. Mit dem Drücken des Tasters fordert der Energiezähler EZ über die hintere / interne Schnittstelle zurückliegende Messwerte an. Diese Anforderung kann nun von einem integrierten Kommunikationsmodul, z.B. DLC-Baugruppe (**D**istribution **L**ine Carrier, power line communication-Baugruppe der Anmelderin), einem externen Modem, einer MUC (Multi-Utility-Communication, siehe beispielsweise Lastenheft MUC (derzeit Version 0.60) des FNN (Forum Netztechnik/Netzbetrieb im VDE)) oder über eine andere Kommunikation von einem Datenbankserver beantwortet werden. Die Antworten werden gemäß dem in **FIG. 2** dargestellten Fall von dem Zähler EZ überprüft und nur dann angezeigt, wenn der Zähler EZ durch die Signatur/Schlüssel bestätigen kann, dass diese Werte von ihm stammen und nicht manipuliert wurden. Somit ist sowohl die Anbringung des Tasters als auch der Ort der Speicherung von Daten beliebig und gehört nicht in den zulassungsrelevanten Bereich eines Messgeräts/Zählers EZ.

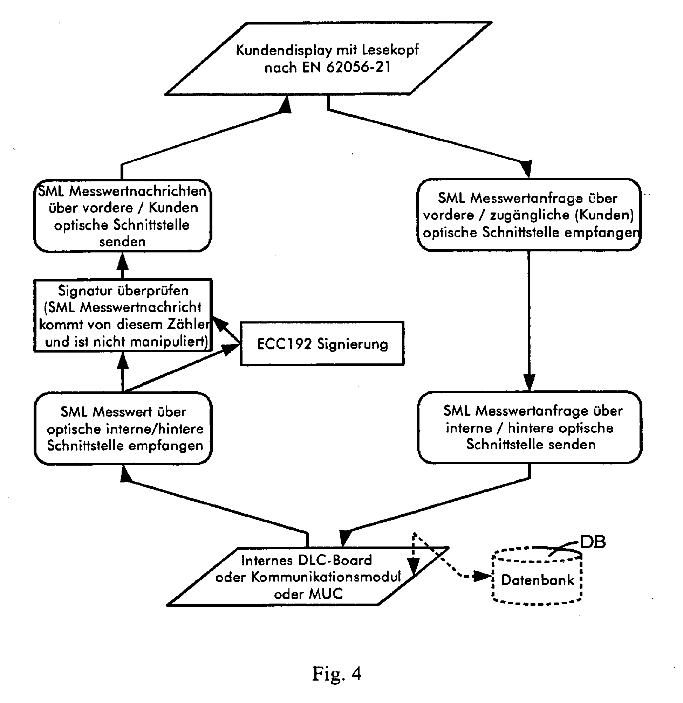

**FIG. 4** zeigt den Ablaufplan für eine Ausgestaltung des Messgeräts/Energiezählers EZ nach **FIG. 1** mit verifizierter Datenausgabe an Kundenschnittstelle oder Anzeige. Diese Ausgestaltung ermöglicht es dem Kunden, an die Kundenschnittstelle KSK ein genormtes Display A oder PC Software mit Auslesekabel (nachfolgend Ausleseeinheit KG benannt und über eine zu vertrauende Quelle beschafft, z.B. Verbraucherschutzorganisation oder Baumarkt) anzuschließen und ohne Eingabe von Schlüsseln die Daten verifiziert auszulesen. Hierzu wird die Anfrage der Ausleseeinheit KG über die interne / hintere Schnittstelle des Messgeräts/Energiezählers EZ an das Kommunikationsmodul, DLC-Board oder MUC weitergeleitet. Die Antworten dieser Module werden überprüft und nur weitergegeben, wenn der Zähler EZ die Echtheit bestätigen kann. Somit wäre eine Manipulation der Daten nur außerhalb der Kundenschnittstelle KSK möglich. Da aber alle Komponenten hierzu vollständig in der Hand des Kunden sind, kann er diesen vertrauen.
**FIG. 5** zeigt beispielhaft verschiedene Ausführungsformen der Anbindung von Messgeräten/Energiezählern EZ nach der Erfindung. Bei der oben dargestellten Ausführungsform ist das Messgerät/Energiezähler EZ über die Kommunikationsschnittstelle KSS, die Leitung L (beilspielsweise LAN local area network), einem Modem/Router R, einer Verbindung W (WAN wide area network; DSL, Powerline etc.) mit einem Speicher SM bzw. Datenbank DB für signierte Messwerte in einem Rechenzentrum RZ des Netz- oder Messstellenbetreiber (d.h. komplette Intelligenz in RZ) und einer Zeitreferenz ZR (z.B. NTP Server der PTB in Braunschweig) verbunden.

Bei der in der **FIG. 5****,** Mitte dargestellten Ausführungsform sind die Messgeräte/Energiezähler EZ über ein Netzwerk L im Nahbereich mit einer MUC, welche in einem Speicher SM₂ einen Teil (Teilmenge) der signierten Messwerte (beispielsweise den oder die letzten Messwert (e)) zwischenspeichert, während ein weiterer Teil der signierten Werte der Kunden/Energiezähler EZ im Speicher SM₁ bzw. der Datenbank DB des Netz- oder Messstellenbetreiber RZ gespeichert sind. Weiterhin wird mittels einer Abschalteinrichtung AE, welche über eine Verbindungsleitung V und die externe Vernetzung (IP, Internet) bzw. WAN-Verbindungen (GSM, GPRS, ISDN, Powerline etc.) mit der zentralen Einrichtung RZ des Netz- oder Messstellenbetreibers in Verbindung steht, eine Fernsteuerung zur Abschaltung der Energieversorgung bzw. fernsteuerbarer Einrichtungen/Geräte (beispielsweise im Rahmen von Home Automation) ermöglicht.

Bei der in **FIG. 5** unten dargestellten Ausführungsform weist ein "intelligentes" Messgerät/Energiezähler im eichrechtlich relevanten Teil ein Messgerät/Energiezähler EZ und in dem nicht zulassungsrelevanten Bereich ein Kommunikations-/Steuerungsmodul COM oder einen MUC (z.B. mit Speicher SM₂ für einen Teil der signierten Messwerte) auf. Messgerät/Energiezähler EZ und COM/MUC sind dabei in einem gemeinsamen Gehäuse angeordnet. Weitere Messgeräte/Energiezähler EZ können dabei über eine Verbindung bzw. Netzwerk L im Nahbereich (z.B. M-Bus, Wireless M-Bus, DECT, ZIGBEE (Funkstandard mit kurzer Reichweite für die Funkvemetzung von Sensoren), Bluetooth, Konnex, Sensornetze oder Feldbus) mit COM oder MUC verbunden sein und ein Teil der signierten Werte der Kunden/Energiezähler EZ wird über das WAN, IP zum Speicher SM₁/Datenbank DB des Netz- oder Messstellenbetreiber RZ übertragen und dort gespeichert. Der Datenaustausch zwischen dem zentralen Rechner RZ und dem Kommunikations-/Steuerungsmodul/-endgerät COM kann drahtgebunden (z.B. Powerline) oder drahtlos unter Verwendung eines Internetprotokolls oder Protokollumsetzung bei verschiedenen Protokollen (Windows NT-, Linux-, Unix-Rechnernetzprotokolle, oder z. B. SMS- oder WAP-Handyprotokolle, etc.) erfolgen. Hierdurch wird auch ein zentrales Hochladen von neuen Funktionen, z.B. neue Tarifwechselzeiten, die Realisierung von Routerfunktionen oder eine funkbasierte Fernauslesung von Haushaltzählern in Kombination mit Zugang zum persönlichen Stromverbrauch auf einer Website ermöglicht.

Die Erfindung ist nicht auf die dargestellten und beschriebenen Ausführungsbeispiele beschränkt, sondern umfasst auch alle im Sinne der Erfindung gleichwirkende Ausführungen. Im Rahmen der Erfindung kann das erfindungsgemäße Messgerät auch beim Gegenstand gemäß der Europäischen Patentanmeldung EP 1 850 500 A1 der Anmelderin eingesetzt werden, wobei die Steuereinrichtung neben den Steuerungsfunktionen auch Kommunikationsfunktionen (MUC/COM) übernehmen, indem diese mindestens einen "quasi dezidierten" Kommunikations-Controller aufweist, der über mindestens eine frei programmierbare Kommunikations-ALU verfügt, wodurch Interruptlatenzzeiten der Steuereinrichtung nicht in die direkte Synchronisation der Steuerungsfunktionen einer Hardwarekomponente (beispielsweise Positionssteuerung eines Motors) eingehen; es können über einen Push-Betrieb gemeldete Daten an einer Pollingschnittstelle gemäß einem mit dem jeweiligen Hersteller/Anwender fest vereinbarten Protokoll zur Verfügung gestellt werden; das Fehlen einer gültigen Zeit wird in den Nachrichten angezeigt, z.B. Sondertarif ohne Nachteil für den Kunden, wodurch das Zeitmodul Z softwaremäßig realisiert werden kann und keine Echtzeituhr RTC (Real Time Clock) mit Ausfallreserve vorgesehen werden muss; es kann eine Anbindung von "Security"-Dienstleistungen an das in **FIG. 5** unten dargestellten "intelligentes" Messgerät/Energiezähler, wie z.B. Einbruchsensoren, Zutritts- und Zeiterfassungsgeräte, Videoüberwachung, etc. durchgeführt werden oder eine Anbindung von Funktionen des Haus- und Gebäudemanagements, wie z.B. Rolladen- und Beleuchtungssteuerung sowie die Steuerung und Überwachung von Haushaltsgeräten (Stichwort: Home Automation) oder eine Anbindung zusätzlicher Funktionen der Automatisierungstechnik, wie z.B. Steuerung und Überwachung von Aufzügen und anderen elektrischen Systemen erfolgen u.a..

Ferner ist die Erfindung bislang auch noch nicht auf die im Patentanspruch 1 oder 6 definierte Merkmalskombination beschränkt, sondern kann auch durch jede beliebige andere Kombination von bestimmten Merkmalen aller insgesamt offenbarten Einzelmerkmale definiert sein. Dies bedeutet, dass jedes Einzelmerkmal des Patentanspruchs 1 oder 6 weggelassen bzw. durch mindestens ein an anderer Stelle der Anmeldung offenbartes Einzelmerkmal ersetzt werden kann.

## Patentansprüche

1. Messgerät (EZ) mit Datenkommunikation zu mindestens einem System mit der Möglichkeit vom System über die Datenkommunikation zurückgelieferte Messdaten als die eigenen zu identifizieren und eine Manipulation der Messwerte auszuschließen und somit diese zurückgelieferten Messdaten vertrauenswürdig zur weiteren Verarbeitung/Auswertung oder Anzeige (A) bereitzustellen, welches aufweist:
• mindestens eine Kommunikationsschnittstelle (KSS) zu Komponenten (SK) eines Systems, welches mindestens in der Lage ist, signierte und oder verschlüsselte Messwerte zu empfangen, in einem Speicher (SM) aufzubewahren und zurückzuliefern, als auch Zeitinformationen bezogen auf eine Zeitreferenz (ZR) anzubieten,
• mindestens ein Messmodul (M), welches den von mindestens einem Sensor (S) gelieferten Messsignalen Messwerte, wobei Messwerte Energiemesswerte oder Zählerstände sind, zuordnet,
• mindestens einen Speicher (MS) für den zuletzt ermittelten Messwert,
• mindestens einen Speicher (ZS) für den Zeitstempel, welcher im Zeitmodul (Z) zu dem zuletzt erzeugten Messwert ermittelt wurde,
• mindestens ein Zeitanpassungsmodul (ZA), welche die über die Kommunikationsschnittstelle (KSS) vom System angebotene Zeit (ZR) überprüft und die lokale Zeit im Zeitmodul (Z) nachführt,
• mindestens einen Speicher (IS) für eine dem Messgerät (EZ) zugewiesene Identifikation,
• mindestens einen Speicher (SS) für den oder die zum Verschlüsseln und / oder Signieren benötigten Schlüssel,
• mindestens einen Verschlüsselungs- und / oder Signatur-Kodierer (VSK), welcher unter Verwendung der Schlüssel im Schlüsselspeicher (SS) die den vorgenannten Speichern (IS, MS und ZS) angebotenen Informationen einschließlich der Gültigkeits- und Vertrauenskennzeichen mit Informationen zur Überprüfung der Unversehrtheit der Daten versieht, in einem aktuellen Datensatz zusammenfasst und mindestens der Kommunikationsschnittstelle (KSS) zur Übertragung übergibt, wobei nur ein Teil der letzten Datensätze oder deren Inhalt im Messgerät (EZ) gespeichert werden, und
• mindestens einen Verschlüsselungs- und / oder Signatur-Dekodierer (VSD), welcher unter Verwendung der Schlüssel im Schlüsselspeicher (SS), die über die Kommunikationsschnittstelle (KSS) zurückgelieferten Datensätze mit Messwerten auf Unversehrtheit des Dateninhalts und die Identifikation des Messgerät (EZ) überprüfen kann, und bei erfolgreicher Überprüfung diese Daten zur weiteren Verarbeitung/Auswertung oder Anzeige (A) bereitzustellen.

2. Messgerät nach Anspruch 1, **dadurch gekennzeichnet, dass** dieses eine Kundenschnittstelle (KSK) aufweist und über diese auf Unversehrtheit des Dateninhalts und Identifikation überprüfte Datensätze an ein beliebiges, geeignetes Gerät (KG) des Kunden übergibt, welches über eine eigene Anzeige (KA) verfügt oder zur Weitergabe an ein Gerät mit Anzeige dient.

3. Messgerät nach Anspruch 1, **dadurch gekennzeichnet, dass** im Identifikations-Speicher (IS) eine Seriennummer oder eine Eigentumsnummer des Systembetreibers gespeichert ist.

4. Messgerät nach Anspruch 1, **dadurch gekennzeichnet, dass** das Zeitmodul (Z) die lokale Zeit und das Datum führt.

5. Messgerät nach Anspruch 1, **dadurch gekennzeichnet, dass** als Zeitreferenz (ZR) eine von Zeitinstituten koordinierte Weltzeit UTC, insbesondere die UTC (PTB) der Physikalisch-Technische Bundesanstalt (Deutschland) benutzt wird.

6. Verfahren zur Erkennung von Manipulationen bei einem Messgerät (EZ), welches zugelassen und / oder eichrechtlich geprüft wird, bei dem
• Datenpakete generiert werden, die mindestens eine Identifikation (IS), einen Zeitwert (ZS), einen Messwert (MS) und eine Signatur (SS) enthalten,
• diese Datenpakete an ein System oder Komponenten (SK) des Systems übergeben werden, welche nicht zugelassen und /oder eichrechtlich geprüft sind, welche diese Datenpakete oder die relevanten Teile speichern (SM) und welche diese Datenpakete oder relevanten Teile auf Aufforderung vom Messgerät (EZ) an dieses zurückliefen,
• die Datenpakete oder deren Inhalt zwischenzeitlich nicht im Messgerät (EZ) gespeichert werden.
• das Messgerät (EZ) die vom System oder Komponenten (SK) des Systems gelieferten Datenpakete oder deren relevanten Inhalt anhand von Schlüssel (SS) und Signatur mit nachgewiesener Sicherheit darauf überprüfen kann, dass die Daten des Datenpakets nicht verändert wurden und von diesem Messgerät (EZ) stammen und
• diese erfolgreich geprüften Daten an einer eichrechtlich zugelassenen Anzeige (A) mit demselben Vertramnsstatus, wie Messwerte, welche das Messgerät (EZ) nicht verlassen haben, dargestellt werden.

7. Verfahren nach Anspruch 6, **dadurch gekennzeichnet, dass** die erfolgreich geprüften Daten an einer Schnittstelle (KSK) des Messgeräts (EZ) zur weiteren Verarbeitung/Auswertung oder Anzeige (A) zur Verfügung gestellt werden.

8. Verfahren nach Anspruch 6, **dadurch gekennzeichnet, dass** das Network Time Protocol NTP zur Übertragung einer Zeitreferenz (ZR) vom System über ein öffentliches Netz zum Messgerät (EZ) benutzt wird.

9. Verfahren nach Anspruch 6, **gekennzeichnet durch** die Benutzung bei einem Energiezähler (EZ).

10. Verfahren nach Anspruch 6, **dadurch gekennzeichnet, dass** die benutzergesteuerte Abfrage von Messwerten über eine Kundenschnittstelle (KSK) des Messgeräts (EZ) und/oder Taster am Messgerät (EZ) oder Kommunikations-/Steuerungsmodul (COM) oder MUC (Multi-Utility-Communication) erfolgt.

## Claims

1. A measurement device (EZ), which communicates data to at least one system, and which has the capability of identifying measurement data returned by the system via the data communication as its own, and the capability to rule out manipulation of measurement values and to thus provide this returned measurement data reliably for further processing / evaluation or displaying (A), which comprises:
• at least a communication interface (KSS) to components (SK) of a system, which at least has the capability of receiving signed and or encrypted measurement data, storing said measurement data in a memory (SM) and delivering back, and has the capability of offering time information related to a time reference (ZR),
• at least a measuring module (M), which assigns measurement signals to measurement values, whereas measurement values are energy measured values or counts supplied by at least one sensor (S),
• at least a memory (MS) for the last determined measurement value,
• at least a memory (ZS) for a time stamp, which in the time module (Z) was determined for the last generated measurement value,
• at least a time adjustment module (ZA), which checks and adjusts the time (ZR), offered by said communication interface (KSS) of the system, to the local time of the time module (Z),
• at least a memory (IS) for the identification assigned to said measurement device (EZ),
• at least a memory (SS) for one or more of the keys required for encrypting and/or signing,
• at least an encryption and/or signature encoder (VSK) that, using the key in said key memory (SS), supplies the information offered to the aforementioned memories (IS, MS and ZS), including the validity and reliability identifier, with information for inspecting the integrity of the data, compiles said information into a current data set and transfers it to at least said communication interface (KSS) for transfer, wherein only one part of the last data sets or their content is saved in the measurement device (EZ), and
• at least an encryption and/or signature decoder (VSD) that, using the key in said key memory (SS), can inspect the data sets returned via the communication interface (KSS) for integrity of the data content and the identification of the measurement device (EZ) and upon successful inspection of this data supplying said data for further processing or evaluating or displaying (A).

2. The measurement device according to claim 1, **characterized in that** said measurement device (EZ) has a customer interface (KSK), which hands over data sets checked on integrity of the data content and the identification to any suitable apparatus (KG) of the customer having its own display (KA) or serves for the passing to an apparatus with display.

3. The measurement device according to claim 1, **characterized in that** a serial number or a property number of the system operator is stored in said identification memory (IS).

4. The measurement device according to claim 1, **characterized in that** said time module (Z) leads the local time and a date.

5. The measurement device according to claim 1, **characterized in that** a world time UTC coordinated by time institutes, in particular the UTC (PTB) of the Physical-Technical Federal Institution (Germany), is used as time reference (ZR).

6. A method for the recognition of manipulations with a measurement device (EZ), which was approved and/or a calibration was legally tested, with the following method steps:
• generating data packets containing at least an identification (IS), a time value (ZS), a measurement value (MS) and a signature (SS),
• handing over the data packets to a system or components (SK) of the system, which was not allowed and/or said calibration was not legally tested, said system or components (SK) storing (SM) and delivering back the data packets or relevant parts on request of the measurement value (MS),
• storing the data packets or their content which in the meantime were not stored in the measurement device (EZ),
• validating with proven safety by the measurement device (EZ) of the data packets or their relevant content, supplied by said system or components (SK) of said system, on the basis of a key (SS) and a signature if said data of the data packets was not modified and came from said measurement device (EZ) and
• displaying the successful tested data on a display (A), which was approved or the calibration was legally tested, with the same confidence status as measurement values, which did not leave said measurement device (EZ).

7. The method according to claim 6, **characterized in that** the successful tested data are provided at an interface (KSK) of said measurement device (EZ) for further processing or evaluation or displaying (A).

8. The method according to claim 6, **characterized in that** the Network Time Protocol NTP was used for the transmission of a time reference (ZR) of the system over a public network to the measurement device (EZ).

9. The method according to claim 6, **characterized by** the measurement device (EZ) is an energy counter (EZ).

10. The method according to claim 6, **characterized in that** a user-controlled query of measurement values was made by a customer interface (KSK) of said measurement device (EZ) and/or by a push button or by a communication/control module (COM) or by a MUC (Multi utility Communication) of said measurement device (EZ).

## Revendications

1. Dispositif de mesure (EZ), qui communique des données à au moins un système, qui a la capacité d'identifier des données de mesure renvoyées par le système par l'intermédiaire de la communication de données elle-même, et pour exclure la manipulation de valeurs de mesure et pour ainsi fournir ces données de mesure est retourné de manière fiable pour un traitement ultérieur / ou l'affichage d'évaluation (A), qui comprend:
• au moins une interface de communication (KSS) pour les composants (SK) d'un système, qui a au moins la capacité de réception signé et ou crypté des données de mesure, mémoriser lesdites données de mesure dans une mémoire (SM) et délivrant en arrière, et a la capacité d'offrir des informations en temps liée à une référence de temps (ZR),
• au moins un module de mesure (M), qui attribue des signaux de mesure de la valeur de mesure, la valeur de mesure est l'énergie des valeurs de mesure ou des chiffres fournis par au moins un capteur (S),
• au moins une mémoire (MS) pour la dernière valeur de mesure,
• au moins une mémoire (ZS) pour une estampille temporelle, qui, dans le module de temps (Z) a été déterminé pour la dernière valeur de mesure généré.
• au moins un module de temps de réglage (ZA), qui vérifie et règle le temps (ZR), offert par ladite interface de communication (KSS) du système, à l'heure locale du module de temps (Z),
• au moins une mémoire (IS) pour l'identification attribuée audit dispositif de mesure (EZ),
• au moins une mémoire (SS) pour une ou plusieurs des clés requises pour le cryptage et / ou de signature,
• au moins un chiffrement et / ou signature codeur (VSK) que les fournitures, en utilisant la clé dans ladite mémoire clé (SS), l'information offerte aux mémoires précités (IS, MS et ZS), y compris les informations validité et identificateur de fiabilité ayant pour contrôle de l'intégrité des données, compile lesdites informations dans un ensemble de données courantes et des transferts à au moins ladite interface de communication (KSS) pour le transfert, dans lequel seule une partie des derniers ensembles de données ou leur contenu sont enregistrées dans le dispositif de mesure (EZ), et
• au moins un cryptage et / ou de la signature décodeur (VSD) qui peut inspecter les ensembles de données reçus via l'interface de communication (KSS) en utilisant la clé dans ladite mémoire de clé (SS) de l'intégrité du contenu de données et l'identification de l'appareil de mesure (EZ) et lors de l'inspection réussie de ces données à fournir lesdites données pour un traitement ultérieur ou de l'évaluation ou de l'affichage (A).

2. Dispositif de mesure selon la revendication 1, **caractérisé en ce que** ledit dispositif de mesure (EZ) muni d'une interface client (KSK), qui remet les ensembles de données vérifiées sur l'intégrité du contenu de données et l'identification de tout appareil approprié (KG) du client, qui a propre affichage (KA) ou sert pour le passage à un appareil avec affichage.

3. Dispositif de mesure selon la revendication 1, **caractérisé en ce qu'un** numéro de série ou un numéro de propriété de l'opérateur du système est stockée dans ladite mémoire d'identification (IS).

4. Dispositif de mesure selon la revendication 1, **caractérisé en ce que** ledit module de temps (Z) entraîne l'heure locale et une date.

5. Dispositif de mesure selon la revendication 1, **caractérisé en ce qu'une** heure UTC mondial coordonné par des instituts de temps, en particulier l'UTC (PTB) de l'institution fédérale de physique et technique (Allemagne), comme référence de temps (ZR) a été utilisé.

6. Procédé pour la reconnaissance des manipulations avec un dispositif de mesure (EZ), qui a été approuvé et / ou un étalonnage a été légalement testé, avec les étapes suivantes:
• générer des paquets de données, ceux contenant au moins une identification (SI), une valeur de temps (ZS), une valeur de mesure (MS) et une signature (SS),
• mains sur ces paquets de données à un système ou des composants (SK) du système, qui n'a pas été autorisé et / ou ledit étalonnage ne était pas légalement testé, ledit dispositif ou les éléments (SK) de stockage (SM) et délivrant en arrière de ces paquets de données ou pertinente parties sur demande de la valeur de mesure (MS),
• stockage de paquets de données ou de leur contenu qui entre-temps n'ont pas été mémorisés dans le dispositif de mesure (EZ),
• la validation de la sécurité, constatée par le dispositif de mesure (EZ) de paquets de données ou leur contenu pertinent, fourni par ledit dispositif ou les éléments (SK) dudit système, sur la base d'une clé (SS) et une signature si lesdites données des données paquet ne sont pas modifiées et sont parvenus dudit dispositif de mesure (EZ) et
• l'affichage de ces données testées avec succès sur un écran (A), qui a été approuvé ou l'étalonnage a été légalement testé, avec le même état de confiance que les valeurs de mesure, qui n'ont pas quitté le dispositif de mesure (EZ).

7. Procédé selon la revendication 6, **caractérisé en ce que** les données sont fournies testés avec succès à une interface (KSK) dudit dispositif de mesure (EZ) pour un traitement ultérieur ou de l'évaluation ou de l'affichage (A).

8. Procédé selon la revendication 6, **caractérisé en ce que** le protocole de temps réseau NTP a été utilisé pour la transmission d'une référence de temps (ZR) du système sur un réseau public à un dispositif de mesure (EZ).

9. Procédé selon la revendication 6, **caractérisé par** le dispositif de mesure est d'un compteur d'énergie (EZ).

10. Procédé selon la revendication 6, **caractérisé en ce qu'une** interrogation commandée par l'utilisateur des valeurs de mesure a été faite par une interface de client (KSK) dudit dispositif de mesure (EZ) et / ou par un bouton poussoir ou par un module de communication / commande (COM) ou par un MUC (Communication multi utilitaire) dudit dispositif de mesure (EZ).
